# EUROPEAN PATENT SPECIFICATION

(11) **EP 3 349 085 B1**
(45) Date of publication and mention of the grant of the patent: **06.05.2020**
(21) Application number: 15781121.7
(22) Date of filing: 09.09.2015
(51) Int. Cl.: H04W 12/06, H04L 29/06, G06F 21/44, G05D 1/00

(54) **SECURE CONTROL OF UNMANNED VEHICLES**
SICHERE STEUERUNG VON UNBEMANNTEN FAHRZEUGEN
CONTRÔLE SÉCURISÉ DES VÉHICULES SANS PILOTE

(43) Date of publication of application: 18.07.2018
(73) Proprietor: Tecteco Security Systems, S.L., 28981 Parla (Madrid) (ES)
(72) Inventor: TRAPERO ESTEBAN, Diego, Alonso, 28981 Parla (Madrid) (ES); MORENO ZAPATA, Adrian, 28981 Parla (Madrid) (ES); ENRIQUE SALPICO, Jose, Antonio, 28981 Parla (Madrid) (ES)
(74) Representative: Herrero & Asociados, S.L.
(86) International application number: PCT/ES2015/070655
(87) International publication number: WO 2017/042403

(56) References cited:
- WO-A1-2013/014646
- WO-A1-2014/115109
- US-A1- 2007 284 474
- US-A1- 2014 032 034

## Description

### TECHNICAL FIELD OF THE INVENTION

The present invention has its application in the telecommunications and engineering sector and relates to unmanned vehicles, especially unmanned aerial vehicles. More specifically, the invention described herein deals with the safe, centralized, viable, and efficient control of unmanned vehicles.

### BACKGROUND OF THE INVENTION

The technology of unmanned aerial vehicles (better known by their acronym in English UAV), also popularly known as drones, has significantly attracted the attention of the media and general public, and the prospect of increased use of drones for civilian applications will be exponential (up to sales figures of 300 million units for 2016).

There is a current regulation on the use of these vehicles, which, among other things, specifies a number of requirements for both piloting, and companies that operate and/or manufacture them. The regulation of drones has responded to the need for establishing a legal framework that allows the development in safe conditions of a technologically cutting-edge and emerging sector. Different regulatory bodies in each country and/or region will be responsible for controlling compliance with these regulations and the control of drone usage. In the case of Spain for example, the State Aviation Safety Agency (AESA), at European level the European Aviation Safety Agency (EASA) and in the United States, the Federal Aviation Administration (FAA).

Hence, for example, in Spain, according to current regulations, drones have been classified into three groups depending on their weight: over 25 kg, under 2 kg and up to 25 kg. It is mandatory for those in the first group to register with the State Aviation Safety Agency (AESA). If the drone does not reach that weight, it does not have to be registered, but each operation or modification should be reported to AESA.

Of course, there are many situations where the drones (or any other type of unmanned vehicles) can undoubtedly serve the public for searches and rescues, environmental monitoring, treatment with hazardous materials, etc., but there is widespread concern about their use in both military and private tasks and the accidents that they might cause. This concern is based on the numerous cases of "hacking" of drones that can allow a third party to appropriate the control of someone else's drone, through unauthorized incursion in the system that controls it.

In addition, there is the concept of "widespread vulnerability" in this robotic aerial vehicle, which refers to another weakness of the UAVs that they share with most devices that somehow establish communications to connect with other devices. The fact is that control algorithms (crucial for this type of machine) are developed in a fundamentally unsafe way. There is simply no systematic way for programmers to detect vulnerabilities once the software programmed is put into operation that runs in any device (car, cash point machines, mobile phones, pacemakers, etc.). Today, in our homes and offices, this weakness is a vulnerability of an average nature as developers can release a patched version of the browser, word processor or operating system (whatever the software component is) whenever they find a security shortfall; while the antivirus and intrusion detection systems can handle many other threats identified previously or not. In the specific case of the upgrading of the control software of an unmanned aerial vehicle it means that most likely, a recertification of the entire system that controls the aerial vehicle has to be carried out (sensors, communication modules...). Additionally it should be noted that the security upgrades often introduce all sorts of new vulnerabilities.

There is, therefore, a need to provide a solution that allows establishing secure and efficient unmanned vehicle control mechanisms that minimize their vulnerabilities and increase the security of the same.

### SUMMARY OF THE INVENTION

The present invention establishes safe navigation control mechanisms of unmanned vehicles using new technological systems, which provide continuous technical feasibility to control aerial devices. The key points on which the solution is based are the increase of navigational safety of these vehicles (for example of UAVs), through authentication, authorization and monitoring mechanisms and the solution of the technical vulnerabilities especially in the control communications of the vehicle and in the information generated by it. All this while taking into account existing reference legislation, on the domestic, European and international level.

In this context, the concept of safety in air navigation, is intended to create links between the person who controls the UAV (pilot), the UAV and regulatory or aviation safety control bodies (which in general, herein will be referred to as Aviation Safety Agents ASA) to bestow, to the action and execution of the flight of the UAV, integrity in communications and systems that certify the concession certified by the ASA. For this, the solution proposes implementing under a secure Authentication, Authorization and Accounting (AAA) protocol, in which these three linked actions form a safe mechanism for the airworthiness of the UAVs. Strictly, by definition, the accounting made in the solution are actually contributions of traceability and therefore of real time monitoring of the UAV. The authentication process, in other words the identification of the pilot and the UAV device, will be certified by a centralized control system as well as the flight authorization. All logic verifying control of the UAV must be based on the regulations stipulated by the relevant bodies; therefore, the UAV control system proposed is totally flexible to each of the characteristics and requirements of the flight of the UAV.

These flight characteristics and requirements will be checked against the information received from the UAV, by the control system, which is able to obtain and process position or location information of the UAV both on the surface and in the airspace (an issue considered essential for not only air but also civil safety, and that is directly related to the regulations governing airspace). The downloading process of the information generated by the UAV for navigation control will be a fully automated process by means of a system hosted in the UAV device called Unmanned Aerial System (UAS), which is the functional element of the UAS that is responsible for conducting, among other things, the tasks of the UAV in the proposed control process. For example, it will collect location information (geolocation) and send it to the Centralized Control System of the UAVs (CCSU) normally belonging to an Aviation Safety Agent, for the registration of the air activity and verification of flight permits given. The CCSU is the functional element (which may be physically located on a server, for example, a server of the ASA) which is responsible for performing the tasks of centralized control of the proposed solution. Communication with the ASA (or more specifically with the CCSU), for safety reasons, can be encrypted using cryptographic security protocols of the transport layer (TLS, Transport Layer Security) or Secure Sockets Layer (SSL, the predecessor of TLS) that will provide secure communications by a network, especially Internet.

Once the process of authentication and authorization has been performed, active and passive monitoring of the flight will be carried out making temporary surveys of the aerial vehicle in flight from the CCSU (active) and the possible use of Geo-Fence technology (known mechanisms used to determine and define allowed or restricted airspace) to delineate areas of operation (passive). The latter method of monitoring can be in real time, adding a unique feature of the solution, which is that of being able to modify the limits of the air zone, setting time windows on the flight zones involved in the Geo-Fence. In other words, windows can be set with time zones and/or daily zones indicating the airspace the drone can be used in each zone. These time windows and the designated flight zone in any of them can be established, prior to the flight (e.g. by on-line connection) but they can also be modified with the drone in flight, i.e., they can be modified after the flight authorization.

Therefore, in a first aspect, the present invention proposes a method (procedure) for controlling navigation of an unmanned vehicle (for example, an unmanned aerial vehicle, UAV), wherein the method comprises:
a) establishing a communication between an electronic piloting device of the UAV called ground control station, GCS, and the UAV;
b) if the communication has been successfully established, the UAV receiving from the GCS a request to access the UAV and a GCS identifier;
c) authenticating in the UAV a user of the GCS from at least the user identifier and the GCS identifier received from the GCS (in one or more layer 2 messages of the OSI model) and if authentication has not been successful, denying access to the UAV to the user and terminating the method;
d) receiving in a server called Centralized Control System of UAVs, CCSU (usually belonging to an Aviation Safety Agent), through a mobile communications network, an UAV identifier and the user identifier;
e) authenticating in the CCSU the user and the UAV based at least on their identifiers (checking at least that such identifiers are registered in an Aviation Safety Agent as allowed) and if authentication has been successful, sending a response of successful authentication from the CCSU to the UAV and if authentication has not been successful, ending the method;
f) the CCSU receiving a request for authorization of the UAV, including the characteristics of the flight for which the UAV requests authorization, the CCSU determining if this flight is authorized and if it is authorized, sending a message of authorized flight to the UAV and monitoring the trajectory of the vehicle (in the case of the UAV, of the flight) and if it has not been authorized, ending the method;
g) if during the monitoring of the trajectory of the vehicle (in the case of the UAV, of the flight) a flight condition not allowed by the CCSU occurs (for example, detecting that the UAV enters an unauthorized flight zone), the CCSU sending a message to the UAV refusing (denying) flight authorization.

In a second aspect, the present invention proposes a system for controlling navigation of an unmanned vehicle (for example, an unmanned aerial vehicle, UAV), that comprises:
an electronic device for piloting the UAV called ground control station, GCS that comprises:
- means for establishing a communication between the GCS and the UAV;
- means for, if the communication has been successfully established, sending the UAV a request for access to the UAV and a GCS identifier.

The UAV comprises:
- means for authenticating in the UAV a user of the GCS from at least the user identifier and the GCS identifier received from the GCS;
- means for, if authentication has been successful, sending to a server called Centralized Control System of UAVs, CCSU, through a mobile communications network, an UAV identifier and the user identifier;
- means for, if a successful authentication message is received from the CCSU, sending to the CCSU an authorization request including the characteristics of the flight for which the UAV requests authorization.

The CCSU comprises:
- means for receiving the UAV identifier and the user identifier through the mobile communications network;
- means for authenticating the user and the UAV based at least on their identifiers;
- means for, if authentication has been successful, sending a response of successful authentication from CCSU to the UAV;
- means for, if authentication has been successful, receiving the request for authorization from the UAV (201), for determining if the flight is authorized and to, if it is determined that the flight is authorized, sending an authorized flight message to the UAV
- means for monitoring the flight of the UAV and check if during the flight monitoring any flight condition not allowed by the CCSU occurs and, if so, sending a message refusing it flight authorization.
Authenticating the user in the UAV can comprise:
- checking if the user identifier appears in a database (of the UAV) as an authorized user identifier;
- receiving from the GCS a password for this user and checking if the password received corresponds to the one linked to said user in the database;
- checking if the GCS identifier appears in the database as linked to said user identifier;
wherein authentication is only successful if all the checks are positive.

In one embodiment, authenticating the user in the UAV also comprises the following checks:
- obtaining the date and/or time when the access is occurring and checking that said date and/or time is within the access times allowed for said user and/or for that device, stored in the database and/or
- checking that access to the network requested by the user is allowed by the security policies defined for said user stored in the internal database; security policies, and/or access times allowed to that user may depend on a profile that has previously been assigned to that user.

Also, the age of the user can be calculated based at least on information stored in the database and if the user is a minor, some permitted access times will be applied to it and some specific access zones for minors.

In one embodiment, to record the user as an authorized user, the user must provide other user information and if the user does not provide this, the UAV denies it access (does not register it as an authorized user); this user information may include one of the following parameters: user's full name, postal address, ID number, passport number, date of birth or any other parameter that can be used to identify the real person behind the user. The UAV sends all information about the user to an external database to the network element. In such external database, the UAV can check if user's data is consistent with the data recorded by the user (or by other users) for other services, and if it detects any inconsistencies, it may deny authentication to the user.

Identifier of the GCS may be the Media Access Control (MAC) address or any other identifier such as for example, the IMEI, IMSI or MSIDSN among others.

In one embodiment, communications between the UAV and CCSU can be performed through the mobile communications network and reception in the CCSU the UAV identifier and the user identifier may comprise:
- receiving at a base station of the mobile communications network, identification parameters of the UAV, among which are the UAV identifier and the user identifier (these identification parameters may also include identification parameters of the UAV in the mobile network such as the IMSI and/or LMSI and/or MSISDN and identification parameters of the SIM of the UAV);
- said base station sending, these parameters to network elements (VLR, HLR, EIR) from the mobile communications network;
- the mobile network authenticating to the UAV from the identification parameters received and if this authentication is unsuccessful, denying access to the mobile network to the UAV and ending the method;
- if the authentication is successful, sending a network element of the mobile communications network (EIR) to the CCSU, UAV identifier and the user identifier (and optionally other identification parameters of the UAV);

This same element (EIR) can receive the CCSU message that authentication is successful and send it to the UAV.

Monitoring the flight of the UAV may comprise the CCSU collecting from at least one network element of the mobile network (e.g., EIR), information on the position of the UAV (e.g., from which cell it is being served).

In one embodiment, communications between the UAV and GCS are made via a first communications network (e.g., WIFI network) and communications between the GCS and CCSU are made through the mobile communications network, and all communications between UAV and CCSU are through the GCS, so that the GCS receives messages from the UAV destined for the CCSU through the first communications network and the GCS forwards (or reroutes) them to the CCSU through the mobile communications network and vice versa (what it is received from the CCSU destined for the UAV through the mobile communications network, it is rerouted by the GCS to the UAV through the first communications network).

In one embodiment, the communications between the UAV and GCS are made through a first communications network and communications between the UAV and the CCSU are made directly (without intermediation of the GCS) through the mobile communications network.

The UAV identifier can be a unique identifier of the UAV, UAVID, made up by the UAV and that is based on at least one of the following parameters: country of manufacture, the UAV manufacturer, the UAV serial number, a verification code of the UAV and where the user identifier is a unique UVA controller identifier, NAAVI.

Communications between the GCS and the UAV are performed through a communications network (e.g., a WIFI network) and the step of establishing said communications (or in other words, establishing the communications network) comprises:
a1) receiving from the electronic device, a layer 2 message of the OSI model, requesting configuration parameters of the network, where this message includes an identifier of the electronic device (a MAC address for example);
a2) if the device identifier is registered in a database of the UAV as a device identifier with allowed access, assigning the device a set of configuration parameters of the network according to the device identification (for example, depending on an access profile assigned to it depending on the device identifier), said set of network configuration parameters including a network address for the device; if the device identifier is not registered in the database of the UAV as an identifier of a device with access allowed ending the method;
a3) sending a layer 2 message of the OSI model to the device with the configuration parameters of the network assigned to the device. All these messages are layer 2 messages of the OSI model, of the DHCP protocol.
The profile assigned in step a2) may depend on whether the device is infected by a virus and if the antivirus version installed in the device is correct.

The communications network linking the GCS and the UAV can be a WiFi, IEEE 802.15.4, IEEE 802.11, Bluetooth or other type of communications network.

The step of monitoring the flight of the UAV by the CCSU may comprise:
- collecting the UAV navigation and position information (via sensors, GPS navigation module, mobile communications module, etc.)
- sending the UAV position and navigation information collected from the CCSU periodically and/or when certain navigation events occur and/or when the UAV receives a position and navigation information request message from the CSU.

This navigation and position information collected the UAV, may include the mobile network base station serving the UAV.

In one embodiment, the UAV receives from the CCSU the list of authorized base stations of the mobile network, detects the base station that is serving it at each time, and if this base station is not in the list of authorized base stations, it sends a message to the CCSU informing it of this situation.

In one embodiment, if the CCSU determines that this flight is not authorized, the method comprises:
- the CCSU sending a message of unauthorized flight to the UAV;
- the UAV, when receiving a message of unauthorized flight, remains parked on the ground where it was at that time or returns to the flight origin position.

In a third aspect, the present invention proposes an unmanned vehicle (for example, an unmanned aerial vehicle, UAV) (201), comprising:
- means for receiving an electronic device for piloting the UAV, called ground control station, GCS, a request to access the UAV and an identifier of the GCS;
- means for authenticating in the UAV a user of the GCS from at least the user identifier and the GCS identifier received from the GCS;
- means for, if authentication has been successful, sending to a server called Centralized Control System of UAVs, CCSU, through a mobile communications network, an UAV identifier and the user identifier;
- means for receiving from the CCSU the result of an authentication based on at least the UAV identifier and the user identifier, and if the authentication has been successful, the CCSU sending an authorization request, including flight characteristics for the UAV to request authorization;
- means for receiving from the CCSU an authorized flight message or a message denying flight authorization.

In a fourth aspect, the present invention proposes a server for control of navigation of an unmanned vehicle (for example, an unmanned aerial vehicle, UAV), comprising:
- means for receiving through the mobile communications network, an identifier of the UAV and the user identifier of a device for piloting the UAV;
- means for authenticating the user and the UAV based at least on their identifiers;
- means for, if authentication has been successful, sending a response of successful authentication from the CCSU to the UAV;
- means for receiving a request for authorization from the UAV so the CCSU determines if the flight is authorized and, if it is determined that the flight is authorized, sending an authorized flight message to the UAV;
- means for monitoring the flight of the UAV and, if during the flight monitoring any flight condition not allowed by the CCSU occurs, the CCSU sending a message refusing it flight authorization.

Finally, in a fifth aspect of the invention a computer program is presented comprising computer executable instructions for implementing the described method, when running on a computer a digital signal processor, an application specific integrated circuit, a microprocessor, a microcontroller or any other form of programmable hardware. Such instructions may be stored on a digital data storage medium.

For a more complete understanding of the invention, its purposes and advantages, the following descriptive report and attached drawings can be referred to.

### DESCRIPTION OF THE DRAWINGS

To complete the description being made and in order to assist in a better understanding of the characteristics of the invention, according to a preferred practical embodiment thereof, that accompanies said description as an integral part thereof, there is a set of drawings wherein, by way of illustration and not restrictively, the following has been represented:
Figure 1 shows a block diagram of the architecture of the UAV Spontaneous Control mechanism in Out of Band Communications (OBSPO) according to an embodiment of the invention.
Figure 2 shows a block diagram of the architecture of the UAV Spontaneous Control mechanism in Semi-Band Communications (SBSPO) according to an embodiment of the invention.
Figure 3 shows a diagram of the architecture and operation of the UAV Simultaneous Control mechanism in Out of Band Communications (OBSIM) according to an embodiment of the invention.
Figure 4 shows schematically the operation of the SDHCP protocol in the Simultaneous Control mechanism in Out of Band Communications (OBSIM) according to an embodiment of the invention.
Figure 5 shows a diagram of the architecture and operation of the UAV Spontaneous Control mechanism in Out of Band Communications (OBSPO) according to one embodiment of the invention.
Figure 6 shows a diagram of the architecture and operation of the UAV Spontaneous Control mechanism in Semi-Band Communications (SBSPO) according to one embodiment of the invention.
Figure 7 illustrates schematically the functional process performed by the CCSU according to an embodiment of the invention.

### DETAILED DESCRIPTION OF THE INVENTION

The present invention proposes a safe control system of unmanned vehicles (devices) and in particular, of unmanned aerial vehicles, UAVs. Based on the communications used for centralized and online control of unmanned aerial devices, we can distinguish three types of embodiments:
Out of Band Communications: In this case, communications for control and piloting of the UAV are established by different mechanisms, technologies or network infrastructures than used in communications established for authorization of flights, authentication of the UAV and flight safety. We can distinguish two types depending on how the process of authentication, authorization and accounting is performed, Simultaneous Method or Mobile Operator Method (OBSIM, "Out of Band Simultaneous") or Spontaneous Method (OBSPO, "Out of Band Spontaneous").

Communications in Semi-Band: (SBSPO, "Semi-Band Spontaneous"): Communications for monitoring and piloting the UAV are established by the same communications channel as in the flight authorization, authentication of the UAV and Flight Security, i.e., through the flight controller device by means of a WiFi tunnel - GSM/UMTS/LTE - INET - ASA, as it will be explained later. Control and piloting the UAV has its origin in the controller device while communications for authorization, authentication and monitoring are routed through the controller device to the ASA (i.e., the controller device acts as an intermediary for communications between the UAV and ASA). Controller device (also called Ground Control Station, GCS,) means the device that, by radio frequency communications with the UAV, allows the pilot to handle and pilot the UAV.

The following table shows a summary of the analysis of each solution and impact on UAVs devices as well as other elements such as network infrastructures used:

| *SOLUTION* | *USER* | *DRONE MANUFACTURER* | *ISP (Internet Service Provider)* | *REGULATORY BODY* |
|---|---|---|---|---|
| **OBSPO** | Pays flight license Privacy Security | Increased sales. Default GSM and GPS module installation | Greater traffic Increase no. of data clients | Investment in infrastructure (control centre) Increased security Greater control with traceability and flight licenses Income from licenses |
| **OBSIM** | | | Investment in infrastructure Authentication via HLR. | Less control |
| **SBSPO** | | Installation of GPS only. Software in controller | Single SIM in controller. Increases data traffic. | Traceability of pilot more than the drone. |

Each of these types of proposals will be explained in more detail below:

### Simultaneous or Mobile Operator Method (OBSIM) in out of band communications:

This UAV Simultaneous Control method in Out of Band Communications method (OBSIM) can be defined as a safety and control mechanism of unmanned aerial vehicles that reuses the infrastructure of the mobile telephony network (e.g., GSM or any other mobile telephony technology used). This methodology is able to control, manage and trace the flight of the aerial vehicle and the pilot. In this case, the control systems of the mobile network for authentication, authorization and accounting (VLR/HLR/EIR) are directly involved in the UAV authentication, authorization and monitoring process. The Aviation Safety Agent and mobile network systems establish a communications link to make the consultations that certify the process.

The authentication system of the aerial vehicle will be the same as that currently used in mobile devices, this authentication is done with the aerial vehicle identification (IMSI, MSIDN, IMEI, UNAS, UAV_ID or any other identifier) and identification is made by the EIR (Equipment Identity Register) which is a system developed for mobile network operators to minimize the risk of fraud. The only exception in this authentication with respect to a mobile device is that for UAVs a unique identifier for the unmanned aerial vehicles is used (and built) called UAVID.

Inside the EIR is a database (DB) in which there is information on the status of the mobile phones (for example, available for using the mobile network, monitored or not available for using the network). Also, there are usually three lists: A "white" list that includes the identification of those mobile devices that are authorized to receive and make calls and optionally a "grey" list that includes identification of those mobile devices that can make and receive calls but that can be monitored to discover the identity of the user (usually using the information stored in the SIM) and a "black" list that includes identifying those mobile devices that are prevented from connecting to the mobile network.

Therefore a query to the EIR determines whether a device is approved or denied service or should be monitored. Once the EIR provides status information of a mobile device to other network nodes (MSC, AuC, HLR, etc.) these may block or not the device that is accessing or already has access to the mobile network. The EIR can offer different types of reports such as: lists of relationship IMEI-IMSI, Notifications (via e-mail, SMS...), Transactions by status of devices, by list and changes of status of the device, Storage of CheckIMEI Detail Records in the Database (per each X attempts to connect, for every change of cells in the GSM network, etc.), regional, national and global black lists...

### Spontaneous Control method in out of band communications (OBSPO):

This UAV Spontaneous Control method in Out of Band Communications (OBSPO) can be defined as a UAV control and safety mechanism, consisting of hardware and software elements with intelligence and autonomy capable of establishing communications with the centralized navigation control system (CCSU) of the ASA through mobile communications technologies, while maintaining control of the unmanned aerial vehicle from a station or emitter using different radio frequency communications technologies. In other words, UAV - ASA communications are established using the mobile network like any other network user and therefore using e.g. a GSM/GPRS/UMTS/LTE-INET tunnel. But, the authentication, flight authorization and UAV monitoring is carried out by the ASA without using any system in the mobile network infrastructure (contrary to what occurs in the OBSIM).

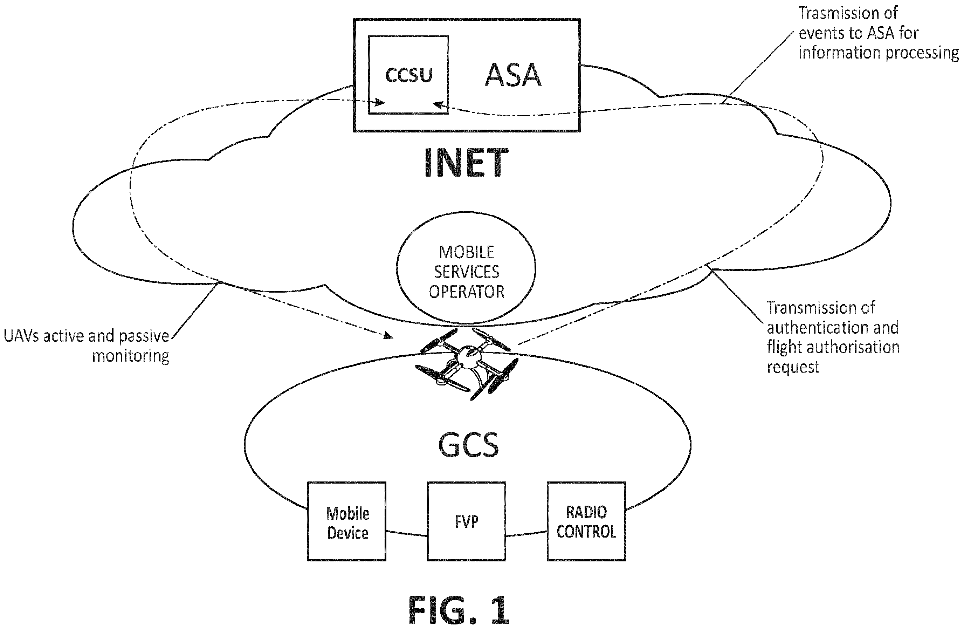

Figure 1 shows a block diagram of the architecture of the OBSPO mechanism. As can be seen in the figure it is the drone itself that sends, via the mobile network, the requests for authentication and authorization of the flight and the events to the CCSU for processing the information. The CCSU is also communicated with for the active or passive monitoring of the UAV. All such UAV-CCSU communications are made through the mobile network.

Regarding communications for control of the UAV flight, in this case, two types can be distinguished:
Control for piloting the UAV: These are communications by radio frequency between the ground control station (GCS) and the drone, which allows control of the drone for the pilot, allowing handling and piloting height, and direction of the aerial vehicle. They are used exclusively for sending information to the UAV to carry out the actions determined by the remote pilot or to transmit video images from the UAV to the GCS. The images are taken by the FPV unit (First-Person View); this unit is usually composed of a camera, a display for the pilot and a video transmitter/receiver with antenna. Due to limitations of some radio frequency standards, in some cases control and video communications will be combined or may use different frequencies and standards for piloting and video transmission.
Remote control and monitoring of the UAV: These are communications using mobile communications technology (either GSM, GPRS, UMTS, LTE or any evolution thereof) with the CCSU, which is responsible for collecting all information related to the aerial navigation of the UAV to collate the permissions given by the ASA.

### Spontaneous Control method in semi-band communications (SBSPO):

This method of UAV Spontaneous Control in semi-band communications can be defined as a UAV security and control mechanism consisting of hardware and software elements with intelligence and autonomy able to establish communications with the centralized navigation control system (CCSU) using the same communications technology with which the control of the aerial vehicle is executed, i.e., both UAV remote control by the pilot communications and the flight control and monitoring process, will be made establishing connections via the same technology. The most common case is the use of WiFi technology for the establishment of the pilot-UAV connections (any other type of communications technology can be used) either for control of direction or height of the flight and for reception of images in the event the UAV device incorporates digital visual media that can provide images during the flight. Likewise, the WiFi device that controls the pilot (the GCS) will need to be connected to the Internet via mobile communications technology (or any other) for routing or readdressing connections received from the UAV destined for the ASA.

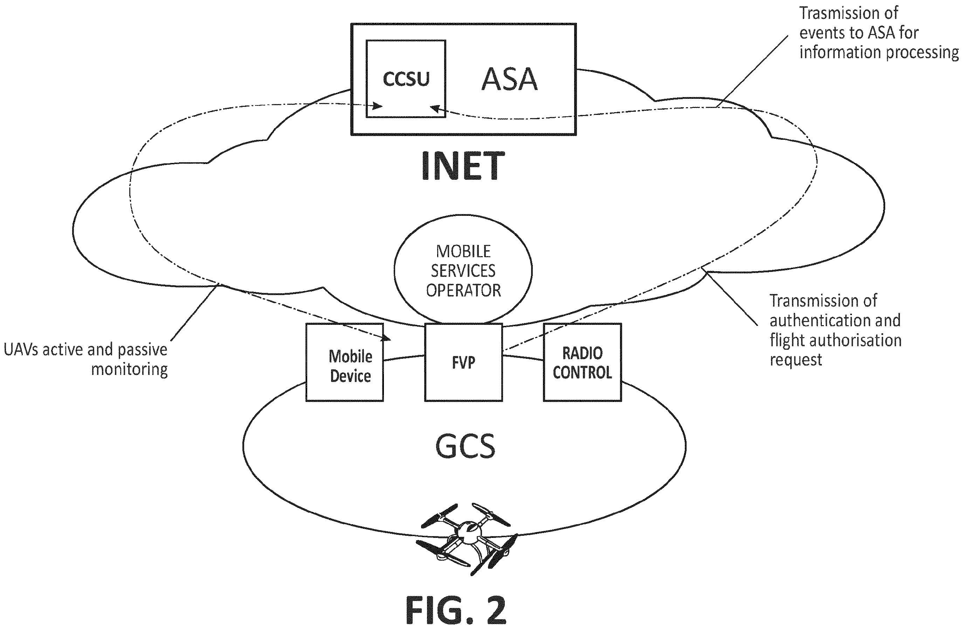

Figure 2 shows a block diagram of the architecture of the control mechanism for this case. As can be seen in the figure, all communications with the CCSU (requests for authentication and authorization of the flight, the events to the ASA for processing information, active or passive monitoring of the UAV...) are not made directly with the drone but through the ground station (GCS) that the pilot controls. That is, the GCS tunnels communications between the UAV and the CCSU or in other words, the messages received from the UAV (using WiFi technology) destined for the CCSU, are transmitted by the GCS to the CCSU (using the mobile network) and vice versa.

To carry out the proposed solution (in any of the previously discussed embodiments), due to the characteristics of the same, the incorporation of additional components (hardware and software) in the unmanned vehicle control becomes necessary. Therefore, the UAV should have additional communication capabilities (connectivity with mobile networks, and in some cases with Internet) and geographic positioning capabilities, for which it will need the following modules:
Mobile Communications Module: This module will allow the UAV communication with other devices via a mobile network by establishing standardized communication channels using the mobile technology used by the network (GSM, GPRS, UMTS, LTE or any other type of mobile) communications). For this, this module will consist of the already known elements necessary for the establishment of mobile communications (including an antenna capable of emitting/receiving waves in the corresponding frequencies of the mobile network). The communications channel will allow establishing connections of switching of data packets (SMS, MMS, WAP, TCP/IP technology or any other) between the different devices that interact in the proposed embodiments. As a prerequisite for the use of mobile technology services through a network operator, using a carrier that stores information of the services subscriber is needed. These can be of two types:
   SIM physical support (Subscriber Identity Module): Also known as SIM card, which stores specific information of the network used to authenticate and identify subscribers in it, the most important being the ICC-ID, the IMSI, the authentication key (Ki) and local area identification (LAI). The SIM card also stores other specific operator data.
   Virtual support SIM (e-SIM): Also known as electronic SIM card, with an identical objective as its counterpart SIM card, attempting to avoid security problems with the use of physical media such as illegal reuse and abuse of the subscriber's account for fraudulent accesses to the infrastructure of the mobile communications service provider as well as for those connections that are M2M and do not require the flexibility of changing the SIM to another mobile module or terminal. This is possible due to the embedding of the e-SIM in the system that hosts the mobile communications module.
Location Module (also called navigation or geolocation): It is a communications module which receives satellite signals to locate the device. It can use any positioning system of those known such as GPS, GLONASS, GALILEO or any another.

The following functions are also incorporated in the main control system of the aerial vehicle, which will articulate additional processes as preferable requirements when implementing the proposed solutions. To perform these functions, the corresponding functional elements will be necessary (software components) in the UAV:
- Universal Authentication System (UNAS): A system in which the authenticity and integrity of the UAV controller is verified, linking the unique identifier of the remote controller (or user) of the UAV to said system by personal password protection of the controller, linking to the control device or devices used by the controller and specific records of the latter such as date of birth, personal identification number (ID card or similar), email address, etc. and then verifying these links. The first link is made manually, i.e., when the users are created in the UAV prior to the flight, each user is linked to the identifier or identifiers of the remote control devices (FPV device or more generally to the GCS) with which the user can access (i.e., with which the user can control the UAV). Users also can also be optionally linked to third-party services. With this first link, the user is now registered and can generate traffic (i.e., communicate with the drone to control its flight and other tasks) and from that traffic information can be extracted to automatically complete the linking or more generally speaking, the authentication information. That is, once established the first link and the user is registered, the user will be asked for the parameters required for the control of the UAV and from these parameters involved in the flight and use of the drone the information necessary for completing the linking process of the different records (flight, pilot, etc.) can be extracted . If the user is not registered, it is denied any access to the UAV and the process will not continue.

All communications between the device and the UAV for this authentication, may be by means of layer 2 messages of the OSI model; or in other words, the authentication expounded can be done in layer 2 (link layer) of the OSI model. The identifier of the GCS may be the Media Access Address or MAC or any other identifier such as for example, the IMEI, IMSI or MSIDSN among others.

When the user registers the first time or whenever a change in the user's data occurs (in the user and password control table) and, optionally, whenever the user wants to access the UAV, information is sent to the user (this can be done by the UAV) to an external data base globally (for the management and control of users worldwide), which can be a synchronization table of users globally (SyN_USERID_WORLD).

This authentication system provides information for the authentication, authorization and monitoring process, i.e. for validation by third parties (Aviation Safety Agency) of the flight of the UAV as well as establishing a unique link with the controller device as mentioned above. This protocol is described in the patent application PCT/ES2015/070421 and in the PCT/ES2015/070423.
- Secure configuration parameter assignment protocol (SDHCP): SDHCP (Secure DHCP) provides the security, customization and improvement of DHCP mechanisms (Dynamic Host Configuration Protocol) of identification, network address assignment and device configuration of a network, proposing an improved DHCP service mechanism. This protocol is described in patent request PCT/ES2015/070422 and in the PCT/ES2015/070423, and is based on a series of predetermined policies that implicitly control connections between the client devices of the DHCP service (emitter, FPV, or similar) and the SDHCP server (UAV). SDHCP brings together and therefore supports all security options and functions that currently exist for protection of the DHCP service. The improvements in the SDHCP protocol with regard to the DHCP protocol are listed below:
   Client/Server Integrity: Secure DHCP network configuration parameter assignment service agents verify the integrity of the requesting device based on the policies established in the server. Such policies are built with the physical identifiers of the network adapters requesting such assignment, together with the role that determines the action of specific assignment in each device.
   Implicit Denial: With pre-set policies, by which any device that sends an assignment allocation request by broadcast message (e.g. DHCPDISCOVER) not previously allowed, the request will be denied and therefore the requester will not obtain assignment for this method. This action will be taken in relation to the physical identifier (MAC) with which the broadcast packet is sent and from which the request is made. Denial Policies basically consist of the following: Denial of emission of data to the device; Denial of communication with the rest of the network devices; Denial of access to at least one port; Denial of communication by means of at least one protocol; Access to the network within a certain period of time. Additionally, the implicit Denial can be run in client/server mode if there is an extensive network area in which protection policies of the SDHCP service must be applied.
   Permanent Control Method: The network element may store the device identification as a device with denied access to the network. This is an improvement when performing management tasks on devices that may vary their role within the users' policies, as well as remaining registered all those applications received without thereby depending on the status of the other network elements.
   Customizing the Service: (As it is dynamic) the server uses the information about the client for the individualization of the network parameters it assigns to the client. Because the information handled by the service of both the connection and the user linked to it, the service can determine the parameters assigned according to the user requesting them and not to the device as its predecessors did.
   Data Protection: The Database (DB) used to store records of each client that requests, has requested or may request the network settings, may be housed in the SDHCP module or on the contrary be external to the server. In the case of being housed in the SDHCP server, the DB is encrypted so that records and information stored by the user is fully protected against malicious use.

In the proposed solution, the following identifiers can be used:
- Unique identifier of the UAV (UAVID, Unmanned Aerial Vehicle Identity), by which the UAV device will be physically identified. The main system or subsystem of the UAV (depending on the case), will be the competent element (software) for the automatic construction of UAVID identifier. For its construction, the following parameters of the UAV can be used such as country of manufacture, the manufacturer of the UAV, the serial number of the UAV, a verification code of the UAV or any other parameter that can be used to identify the vehicle. Normally, each code forming the UAVID shall correspond to the regulations declared by the competent body of navigation airspace control. For example, under Spanish law, regardless of country of manufacturer of the UAV, manufacturer of the UAV or serial number of the UAV, the verification code will unequivocally determine to the CCSU, and therefore the ASA, the identity of the UAV physical device; so, in the case of Spain, it may be required to include this verification code on the UAVID as it identifies the UAV uniquely.
- Unique identifier of the controller of the UAV (also called Network Access Authentication Validation Identity), by which it will identify the individual controlling the UAV (also called pilot or operator or simply user). This identifier links the information of the pilot, registered in the authentication system hosted in the UAV, with their passwords to validate the integrity and authenticity of the controller user. The authentication system used will be UNAS, mentioned above. As will be explained, this identifier is linked not only to the password but to other data that allow the identification of the actual person who is really behind that user (date of birth, personal ID number (ID number or similar), e-mail...), which will allow checking that the user is who it claims to be.

One of the key elements of the proposed solution is the Centralized Control System of UAVs, CCSU. This functional element is responsible for authentication, authorization and monitoring of air activity of the UAV device (or a set of them), so among other things, it will be equipped with the necessary capacities to establish secure connections with the UAVS to perform these tasks. The CCSU should be able to determine at all times the integrity, situation, flight status of the UAV together with identification of the person responsible for the flight of the UAV. As indicated, three main functions performed by this system can be distinguished:
Authentication: The process by which the CCSU is able to identify the UAV device, including its characteristics for air navigation, such as weight, flight range, maximum height of flight, communications technology to record the start of the activity of a UAV.... Information will be provided by the UAV to the CCSU, to request verification (authentication) of UAV device identity and of the individual who will pilot it remotely or the person responsible for the flight. To perform this authentication process it will be necessary to have two identifiers of each of the identities to be verified, the UAV device identifier (UAVID) and UAV pilot identifier (NAAVI). This is not the only authentication done in the proposed solution, but rather there are at least two types of authentication, one done by the UAV of the pilot (which would be UNAS and will be explained later on) and another, mentioned in this paragraph, done by the CCSU of the UAV and of the pilot.
Authorization: The process by which the CCSU is able to authorize the flight of the UAV according to the characteristics for air navigation, either weight, flight range, maximum height of flight or communications technology, etc., in order to record the start of the activity of a UAV. The authorization process shall verify, once detected and authenticated the identity of UAV (UAVID) and the pilot of the UAV (NAAVI), whether there are the necessary and sufficient requirements for the execution of a controlled and safe flight ratified by CCSU of the Aviation Safety Agent.

Two flight authorization sequences can be distinguished:
- Flight start authorization: This determines, comparing the data of the flight licence of the UAV, the permits for the start of the flight. Additionally, the process will check the list of unauthorized UAVs.
- Authorization of flight zone: The permitted or restricted airspaces are determined and delimited and authorization is given or denied during the flight depending on the position of the monitored UAV, regarding these airspaces that are permitted or restricted. To define these spaces, a Geo-Fence is typically used, which is just a virtual perimeter that establishes a specific geographical area; when it is detected that this perimeter has been exited (or when it has been entered) a warning is usually generated. The Geo-Fence delimits airspaces that are permitted for flying of the drone and/or airspaces that are prohibited for flying of the drone. At present, to establish the Geo-Fence, the UAV has some maps with preloaded coordinates (longitude, latitude and altitude) delimiting the allowed airspace. However, the user can modify the parameters of the map or even change them and could fly into the prohibited airspaces and the regulatory body (ASA) would not know about it. To avoid this, in the present invention, it is checked that these preloaded maps have not been modified; as if they have been modified, they will be denied flight permission.

On-Line Geo-Fence: Automatic authorization in real time of flight zones; the ASA can load and/or modify the parameters of the Geo-Fence online, prior to or following authorization of the flight. In some cases it may be customized by the administrator or operator of the UAV (as parental control) or user-configured outside the ASA (off line) provided the rules of the ASA for on-line method are met.

Preloaded Geo-Fence: Pre-Authorization of the flight zone authorized for the execution of the flight. The delimited zones will have to be pre-loaded in the UAS and may be: Global (those pre-set by the ASA on restricted flight zones for any air navigation) or personal (those pre-set by the user or owner of the UAV to delimit the flight zone for its own issues on use of the UAV, such as for example for applying the parental control concept on the flight or piloting of a UAV).

The UAV can know its location (for example through GPS) at all times. In one embodiment, the UAV compares its location with the Geo-Fence map and when the UAV, detects that it has left the authorized zone (pre-loaded) it warns the ASA (the CCSU) and the latter may deny it flight authorization. On the other hand, as discussed below, the CCSU monitors the UAV and therefore knows the location of the UAV at all times. In an alternative or simultaneous embodiment, when the CCSU detects that the UAV has left an authorized zone (or has entered a restricted zone), it can send a flight authorization denial message to the UAV.

Monitoring: The UAV monitoring process is the supervision and surveillance of the UAV and the administration of notifications to determine the status in real time of the UAV that has started a flight or not. Two types of monitoring can be distinguished depending on reactive capacity of the UAV:
Passive: The ASA through the CCSU will monitor the UAV through surveys, GSM beacons or any other monitoring mechanism according to the communications method (OBSIM, OBSPO or SMSPO) used to establish communications UAV<>CCSU. As in active monitoring, survey mechanisms of the CCSU can register the flight location information to check it against (or compare with) the records of flight limits on the air zones.
Active: The UAV interacts with all elements that collect flight information (sensors, GPS navigation module, mobile communications module, etc.) to detect certain navigation events and then send them to CCSU that will compare and register the information in the ASA. The UAV (e.g. using GPS) can determine its geo-location at all times and report said geo-location to CCSU. In addition, it can send to the CCSU events related to the limits of aerial flight zones (the UAV can for example, compare its location with the Geo-Fence map stored in it and notify the CCSU if it is in a restricted area, or if it is near restricted zones) or other events (sudden changes in speed and/or direction...).

Apart from these 3 functions, the CCSU will perform the functions of air navigation information or, in other words, the CCSU will be able to collect information from other authorities or third-party systems to be forwarded to the UAV that request it, for all applications that may have a positive impact on the control of the UAV. These may be among others: Design of Airspace, Air Corridors, Weather Conditions (air mass movement, etc.), Management of air congestion, Forecast elevations of land, route planning and route changes... This information will be sent from the CCSU to the UAV (and this may redirect it to the pilot) or it can be directly sent to the pilot.

The operation of centralized control process (also called safe control process) of the present invention for each of the solutions (embodiments) proposed will be now explained in detail. During the explanation, all the points involved in the process will be shown (in communications, piloting commands, authentication, authorization and monitoring...).

The starting point for all cases will be the initialization or start-up of the UAV, and therefore the initialization of the system the latter incorporates, called UAS (Unmanned Aerial System). This system by means of the subsystem that integrates the communications and geolocation modules, with the main UAV system, will check the availability of each. For example, the following initial sequence will be executed prior to the flight authorization:
1. Verification of piloting control antenna: This action initially corresponds to the UAS of each manufacturer, as it is understood that without it, a flight cannot be made unless it is configured for automatic navigation. Generally speaking, not only the antenna but also the whole communications module that allows piloting is verified. These communications will normally be WPAN communications (Wireless Personal Area Network) but any technology can be used, such as low speed ("Low Speed Ratio", IEEE 802.15.4), high speed ("High Speed Ratio", IEEE 802.11), Bluetooth data link or any other type of communications technology.
   The system that manages the status of modules of additional communications, that is the UAS, will also record the status of the control antenna and whatever technology (WiFi, C-band, Bluetooth, etc...) checking the possibilities of connectivity that the technology has and so take into account the state of the same to establish communications not directly related to the piloting commands of the UAV.
   If navigation is automatic, the flight would be made exclusively following the criterion of GPS coordinates obtained via the GPS module and consequently would pass to the next verification step of the GPS.
   The FPV unit can also be checked (comprising for example a front, a rear and a mobile camera, the video transmission module...) and stabilizer module (comprising various sensors providing information on flight, such as gyroscopes, accelerometers SONAR-SODAR, thermal or pressure sensors, magnetometers...). The UAS also has a module for external adapters such as USB or SD (secure digital cards) which can also be verified.
2. Verification of GPS geolocation module: These actions correspond to the subsystem responsible for the integration of additional modules. As it is a receiving device, the status of GPS satellite signals will be checked to then geolocate the UAV, recording the surface position prior to the start of the flight.
3. Verification of mobile communications module: This action also corresponds to the subsystem responsible for the integration of additional modules with the main system of the UAV. It will check the status of the available mobile technology (GSM, GPRS, UMTS, LTE or whatever corresponds) in the place where the flight will start. This mobile communications establishment verification is aimed at subsequently determining the safe control method of the UAV (e.g., OBSIM, OBSPO or SBSPO) since depending on the mobile communications module status, UAV authentication, flight authorization and air navigation monitoring, can be carried out by one or another means, depending on the software and hardware characteristics of the UAV.

Notably, the subsystem may or may not be integrated by the manufacturer of UAVs in the main system that controls the UAV original hardware and that under the specifications of the solution and therefore of the regulatory body, will be able to check the status of the mobile communications and GPS modules.

Once these initial checks have been made, the authentication, authorization and monitoring of the UAV flight will be executed. This process will be done differently for each of the possible embodiments (based on the communications used for centralized control of the unmanned aerial devices) as explained above. Of course, all processes will be executed according to the rules approved by the ASA for the defined characteristics of the flight (range, height of the flight, etc.), in short, those certified in the license enabled for the UAV. The operation of the proposed solution for each of the embodiments discussed above is described below.

### Out of band simultaneous control method (OBSIM):

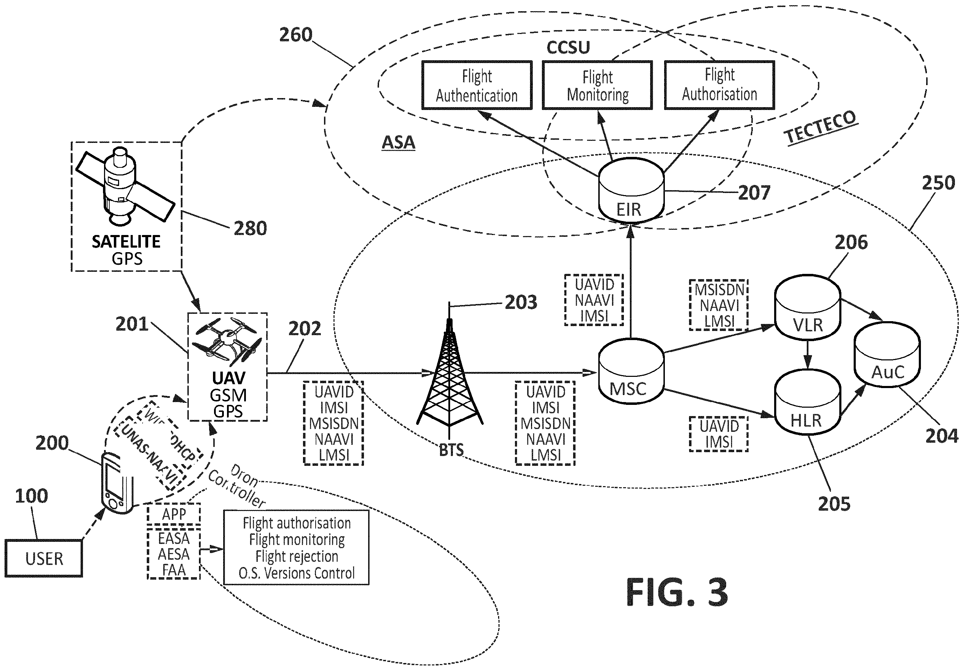

The following explains in more detail the functional description of the process of Security Control of UAV proposed in this invention under the out of band simultaneous communications method called OBSIM. Figure 3 shows a diagram of the architecture and operation of the mechanism proposed in this case. As explained above, in this case, the control systems of the mobile network (250) for authentication, authorization and accounting (VLR/HLR/EIR) are directly involved in the UAV authentication, authorization and monitoring process. The Aviation Safety Agent and mobile network systems establish a communications link to make the consultations that certify the process.

If for communication between the client device (the device that wants to take control of the UAV, that is, the device the pilot is going to use to control the UAV also called Ground Control Station, GCS) and the UAV, a technology that implies the establishment of a network is used (for example, WiFi technology), the secure dynamic host configuration protocol (SDHCP) will be used to provide the client device with configuration parameters of the network securely. In the rare case that establishing a network is not necessary, the client device is linked to the UAV without using this protocol. This protocol, in the initial configuration of the unmanned aerial vehicle, is disabled until the first communication is made.

Once it has established the first communication between the client device and the UAV for the initial configuration, the SDHCP is automatically enabled and this will record the information from the client device and will automatically add it to the DB like a device with authorized access. In an alternative embodiment, this information (of authorized access devices) is added to the database by a system administrator and, therefore, this initial SDHCP configuration in the UAV will not be made by the client device.

Once the aerial vehicle is configured, whenever this or any other device wants to access the control of the UAV (and it is necessary to establish a communication network such as WIFI) it will have to pass the SDHCP mechanism.

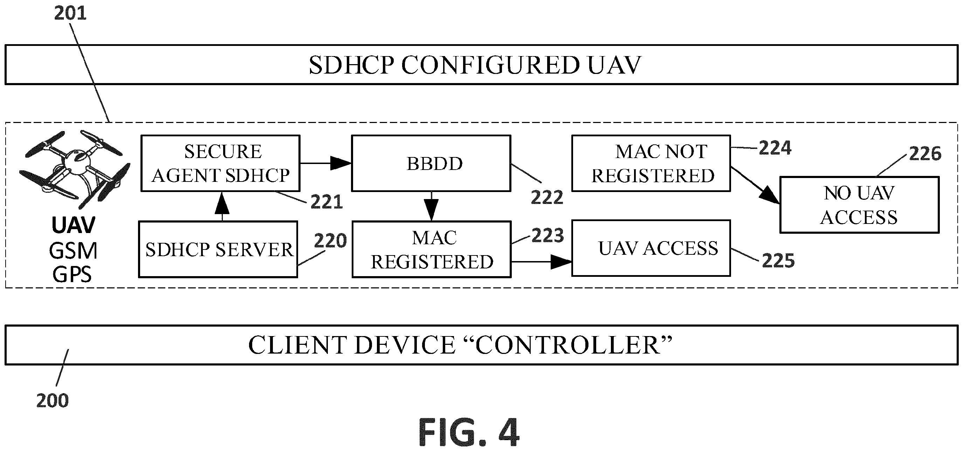

As shown in Figure 4 (that schematically shows the operation of the SDHCP protocol in the OBSIM mechanism), the operation of this protocol is as follows. The client device (200) (the GCS) that wants to take control of the UAV (201) will send a message with the request for network configuration parameters to establish communications. This message may be a layer 2 message of the OSI model (Open Systems Interconnection) of the DHCP protocol (for example, a multicast or broadcast message) and will include an identification of the client device. This identification of the GCS will normally be the address of the Media Access Control or MAC, but may be other identifiers such as IMEI, IMSI or MSIDSN among others. The SDHCP (221) mechanism will consult the Database (222) of the SDHCP (220) server to check if the device identifier (its MAC address or other identifier that is used) is correctly registered. If the identifier of the client device is properly registered (223), it will have access to the UAV (225) and the UAV would send the necessary parameters for establishing communication, but otherwise if the client device (200) does not have its identifier registered (224), access to the UAV will be denied (226), it will not be sent the necessary parameters for establishing communication and therefore, the client device cannot communicate with the UAV (and therefore cannot control it). It can even be directly sent an access denial message although this is not essential. In one embodiment, there is a table with device identifiers with denied access and the first thing done is to check whether the identifier of said device is in the table, and if so, access is denied.

In the event that the identifier of the client device was in the table of registered devices (and it is not in the table of devices with access denied, if this table exists), the SDHCP server would see in the table which network configuration parameters correspond to it and would send them (or would send the device a group of possible values of parameters and the device would choose which ones it prefers in this group of possible values). In one embodiment, this process is done by assigning an access profile to the client device, obtained from the database according to the identifier of said device and assigning the device a set of network configuration parameters based on the access profile assigned to it, said set of network configuration parameters including a network address for the device, where said network address belongs to a range of network addresses available for the device that depends on the access profile assigned to it. Therefore, these profiles will determine the network address available to the client device and therefore their communication capacities. More details on the operation of SDHCP mechanism are described in patent application PCT/ES2015/070422.

The client devices can be computers, tablets, PCs, mobile phones, smartphones, laptops and generally any computer electronic equipment or device that can connect to a communications network. In one embodiment, the identifier used in the database to indicate which device has access to the network is at least the MAC address of the device. However, in other embodiments, other parameters may be used to identify the client device such as, for example, the IMEI, IMSI or MSIDSN.

Once the link has been established and activated from the device (200) and the UAV (201) (using the SDHCP protocol if it has been necessary to use this protocol to establish the communications link between the client device and the UAV because the client device used for example a WIFI network to connect to the UAV), the authentication process will take place in the universal authentication (UNAS) module. During the initial configuration of the proposed system (when the user first logs on), the first requirement is the creation of the user network access authentication identifier or NAAVI, which identifies the user (the pilot), and is used to establish the link (association) between the user (100), client device (200) and UAV (201).

The universal authentication module (UNAS) stores in a database all information of potential users of the UAV, which includes at least the NAAVI identification of the user and a password for that user. Normally, additionally another type of information is included such as date of birth, personal identification number (ID number or similar), e-mail address, among others. In addition, the link between the NAAVI identification of the user and the device (or devices) that the user is going to use is made. That is, the identification of the device or devices (GCSs) said user is going to use appears for each user identifier (NAAVI). All these data (including the link) can be entered manually in the UAV by a system administrator or provided by the user in communication with the UAV during its initial configuration. Even the link can be made automatically by the UNAS of the UAV, during the initial configuration, linking the user to the device that the user is accessing in this initial configuration. It is necessary to add the user in the UNAS module (or more particularly, in the UNAS database module called NAAVI module), because if the user is not created it will not be allowed access to the UAV.

Once the user is configured in the UNAS module, the user will also be linked to the SIM card, eSIM or any other virtual card that uses the UAV for mobile communications, and if user authentication is positive and it has access to the UAV, this access information will be sent together with the configuration parameters (including for example, the IMSI or the MSISDN) of the SIM card, eSIM or any other virtual means, to the air control bodies or ASAs (EASA, EASA, FEE, etc.).

As indicated, the NAAVI user identifier, links not only the password but also other data that allow identifying the identity of the actual person who is really behind that user (date of birth, personal identification number (ID card or similar), e-mail address...). All this data, used by the user for this and other services, may appear in a global user synchronization table (SyN_USERID_WORLD). Therefore, as part of the initial authentication process, the user identifier and the user data provided can be tracked in these global tables, obtaining the actual person behind that username and detecting any inconsistencies in the data, which may be indicative of fraud. In this case, registration of that user would not be allowed or, in other words, authentication would be negative. That is, as part of the authentication, it can be checked that the user is who they claim to be.

After carrying out the initial configuration, each time a user wants to gain control of the UAV (once the SDHCP mechanism has been passed if necessary) authentication of it will be made in the UAV (specifically in the UNAS module).

When the UAV receives from a client device a piloting request message (or other words, for control or access to the UAV), once the SDHCP has been passed if it is necessary (because if the SDHCP denies access, a communication between the client device and the UAV cannot be established and, therefore, cannot send a control request message), the UAV will request user identification (NAAVI) from who is accessing and their password. In an alternative embodiment, this information may be already included in the access request message so it will not be necessary to ask the user for it. When the user sends its identification and the password, the UNAS module of the UAV will check whether the user (identification) is registered in the database (NAAVI module) and wheteher the password provided is correct. If any of these checks are negative, the process will not continue, it will determine that authentication has not been successful and, therefore, the user will be denied access.

In one embodiment, there is a table with denied user identifiers and the first thing done is to check whether the identifier of said user is in the table, and if so, the authentication is deemed unsuccessful and the process will not continue.

These messages exchanged between the UAV and the client device (GCS) (for example the piloting request) may be 2 layer messages of the OSI model.

Then it checks the link between the user and the device it is accessing. For this, the UAV checks that the device (100) that is being used, is registered in the corresponding database (of the UNAS module) as linked to the user who is requesting control of the UAV (or in other words, access to UAV). If the user is not linked to the device for which it has requested access, the authentication process will not continue and it cannot access. If the user is linked to the device, the authentication process will continue. If there are no further steps in the authentication process, it will have been successful and the user will be given access to the UAV.

In an alternative embodiment, authentication may be more complex and include more stages. For example, it can be checked if the date and time of access is allowed for the user (the module NAAVI will include information on the date and time allowed for each user for this) and/or it can be checked whether the user has fully or partially restricted (in these zones) access due to security policies or depending on a profile that is assigned to it (e.g., quarantine, parental control...). These and other possibilities for additional authentication are described in patent application PCT/ES2015/070421.

UAVs not using WiFi technology (or other technology that requires the establishment of a network) to communicate with the controller device, do not need to apply the SDHCP protocol as no network is established. This can happen in automated flights since no control of the UAV is required during the flight if the parameters are configured prior to the flight and, therefore, there is no need to establish a communication network between pilot and UAV. However, UNAS authentication will always be applied to manage the user (regardless of whether SDHCP was previously used to communicate or not).

As it has been explained so far, in the first initial configuration, the SDHCP and UNAS safety parameters of access to the UAV are configured among other things. When the user wants to access the UAV to make it fly, in addition to passing the security checks of the SDHCP (if necessary) and UNAS, it will have to proceed to requesting the flight authorization. The diagram shown in figure 3 will be used to explain this process. Before proceeding with the flight, it is necessary to register the UAV (201) in the network (typically a mobile network) to be able to request said flight authorization; for this, the UAV sends parameters (202) from its mobile communications module to the nearest base station (203) identifying said UAV in the mobile network. These parameters received by the base station can be, among others:
- UAVID, the registration or identification of the UAV.
- IMSI (International Mobile Subscriber Identity), the unique identification code for each UAV, integrated in the SIM card, eSIM or virtual card.
- MSISDN (Mobile Station International Subscriber Directory Number) is a number that uniquely identifies a SIM card, eSIM or virtual card.
- NAAVI is the unique identifier for each user or individual.
- LMSI (Local Mobile Station Identity) is a temporary identification that can be assigned to a mobile station.

The next step is that the base station sends the UAV and user identification used, to the network nodes of the mobile network. Said mobile network can be of any type, for example, GSM, GPRS, UMTS, LTE, 5G, 6G, etc. For the GSM network, the network elements that can receive identification of the UAV (through the MSC node) are the HLR (205), VLR (206), AuC (204) that check the data of the SIM card, eSIM or other virtual card, as well as the user (NAAVI). In other words, these nodes carry out a standard authentication of a mobile device, but also use pilot identifiers (NAAVI) to identify the identity and integrity of the pilot. That is, these nodes make a normal mobile network authentication (as to any other mobile telephone in the mobile network) of the SIM the UAV has; but also they can have a database linking the values of the IMSI, MSIDSN with the user identifier (NAAVI) and in addition to make a normal authentication, they can check that said link is correct. The equipment identity register database (EIR) (207) also receives these parameters and records and checks the registration number of the UAV (UAVID). That is, the EIR verifies the identity of the UAV (which will play the role of the IMEI of the mobiles); each UAV must be registered in the EIR database, if a UAV is not registered in this DB it cannot fly as, the EIR would not grant access and it could not request flight authorization. In addition to authenticating the mobile service and authenticating the equipment and user in the mobile network, it is also authenticated in the Aviation Safety Agent, ASA,

The ASA (260) has registered each and every one of the UAVs that are authorized. This record includes three sub-records or sub-databases, which are:
- Authentication (208), all identifications of UAVs are stored in this record.
- Flight authorization (210), in this record all identifications of UAVs are stored, if a UAV is not registered in this record, flight authorization cannot be requested and it cannot fly. It also has registered exclusive flight zones for each user/controller/pilot and those restricted for each type of flight. Additionally, the flight conditions with the conditions at that time of other flights that are being monitored will be verified to avoid potential conflicts in the airspace. The causes for which a UAV may not have flight authorization, can be for example:
   ∘ Be flying in a restricted zone, due to a change of cell (GSM, GPRS, UMTS, LTE, 5G, 6G, etc.) or to the flight coordinates (GEO FENCE "GPS" (280)).
   ∘ Due to publication of state image contents and dynamic images.
   ∘ Due to theft or loss of the UAV.
   ∘ Due to modifying the preloaded GPS (Geo-Fence) map.
   ∘ Due to altering the weight of the aerial vehicle.
   ∘ Modification of the UAVs Identifier
   ∘ Modification of the NAAVI
   ∘ Modification of flight parameters (BTS Ranges)
   ∘ Belonging to the list of unauthorized UAVs
   ∘ Any of the conditions of the ASA for not authorizing the flight.
- Flight monitoring (209), in this record the identifiers of the UAVS that are being monitored appear and all the collected data (actively or passively) about the flight of the monitored UAVs is stored. Moreover, identifications of the UAVs appear that, for whatever reason (e.g. breach of any requirement of the ASA) should be monitored more strictly.

The EIR will send the information it has of the UAV, to the CCSU in the ASA, so that the information can be checked against the authentication record of the ASA. If the authentication process is successful, the CCSU will send the notification to the UAV to continue the process with the authorization to fly, in which the ASA will verify the flight conditions for the UAV requesting authorization. This information will be checked against the flight authorization database, which records flight privileges, characteristics of the UAV, restricted or demarcated flight zones or any other condition or requirement defined by the ASA. If this second verification is positive, the CCSU will send a message to the UAV (via the mobile network) authorizing the flight.

After this, in the first communication ASA-UAV (via the mobile network), ASA will provide all ranges of base stations (i.e., a list of identifiers of base stations or cells) of the area of influence of the UAV (the zone where the flight of said UAV is authorized), that we can say are the "authorized" base stations. If for example the UAV belongs to the Region of Madrid, it will only have flight authorization in this Region, except for the perimeter of government buildings, military bases and/or any other protected building. When the UAV needs to fly in a zone that does not belong to the initial zone it has permission for (such as outside its autonomous region), it will be communicated to the ASA and this may authorize or deny the flight.

When the UAV already has flight authorization and is ready to fly. The UAV by means of its mobile communications module will detect the base station it is serving at all times (for example, the base station it receives with the most power). To detect the serving base station, the UAV will follow the known procedure for any normal mobile telephone. As the UAV moves location, it can change the base station it is connected to (is serving). For the first serving base station and each time it changes serving base station, the UAV will check if this BTS is in the list of "authorized" BTSs. If it is not, the UAV will notify the ASA and if the ASA sees that it is a station in the vicinity of which it does not have permission to fly (for example, because the UAV has moved to a base station that is close to the perimeter of a government building, military base and/or any other building that it does not have permission to fly over), the flight will be denied in said airspace. In this situation, the UAV will remain parked in the place where it is or will return to its origin. Normally, to prevent the user (pilot) from ignoring the denial of the flight, at the time the UAV receives the message from the ASA denying the flight, the UAV will stop or return to origin, regardless of the orders of the pilot (i.e., the UAV will ignore the pilot's instructions if they are contrary to this order received from ASA (from the CCSU)).

In general, flight information is automatically sent to the ASA (either periodically, when the base station is changed or in the vicinity of an unauthorized zone), and the ASA could change the status of the UAV to monitored flight or to non-authorization of flight.

An example of the type of parameters received by the UAV, from the base station (e.g., a BTS that it detects, is set forth in the following table.

| **Parameters BTS_UAV** |
|---|
| ePSCorrelationNumber:2c0006610000008f |
| Attach type 6 |
| ePSevent: bearerActivation |
| pDNAddressAllocation: 182.28.180.249 |
| UserLocationlnfo: ECGI: 214-07-4000-4638 |
| UserLocation Info: TAI :214-07-4000-4765 |
| NetworkElementidentifier: 182.28.152.242 |
| TimeStamp: 03/08/2015 11:53:58:000 (utc=true) |

### Out of band spontaneous control method (OBSPO):

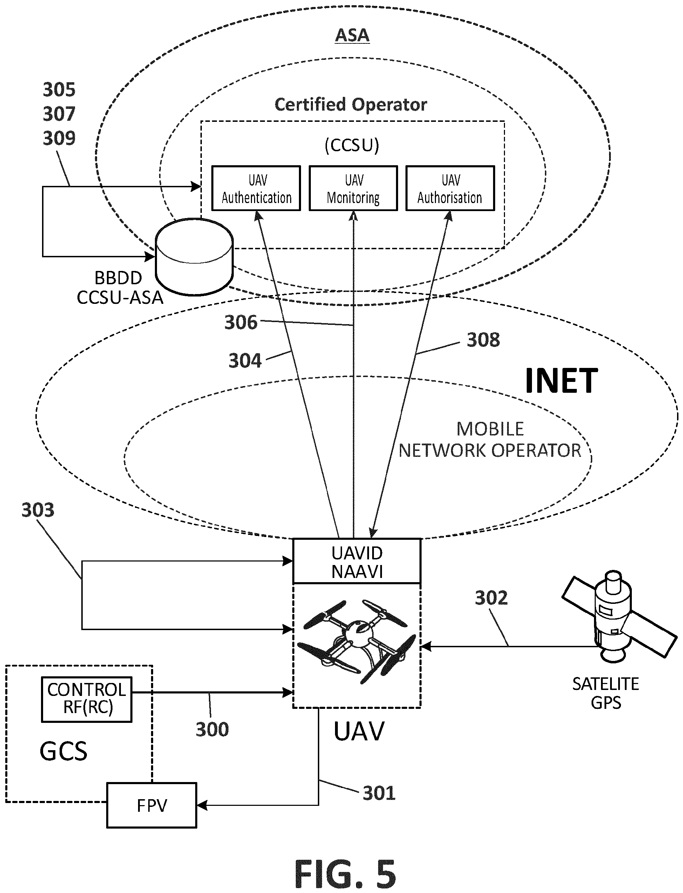

The following explains in more detail the functional description of the process of Security Control of UAV proposed in this invention under the out of band spontaneous communications method called OBSPO. This method is characterized by establishing communications with Centralized Control Systems of UAVs by means of data connections using the mobile communications module (GSM, GPRS, EDGE, UMTS, HSDPA, LTE., etc.) integrated in the UAS and that will provide the connectivity to the UAV with Internet and consequently with the CCSU. Figure 5 shows a diagram of the architecture and operation of the mechanism proposed in this case.

Once the UAS and the system incorporating the GCS (Ground Control System) have started, the control process will begin with the first communications (300) for establishing the UAV-Pilot link for manual piloting of the aerial vehicle (using the different systems provided by the UAV manufacturer).

In this method, the SDHCP mechanism (if for communication between the controller device and the UAS is necessary to establish a communication network) and the UNAS authentication mechanism, described for the previous embodiment, will also be used. During the initial configuration, the SDHCP and UNAS safety parameters for accessing the UAV will be configured and whenever the user wants to establish a communication network with the UAV or wants to access it, the controls defined in SDHCP and UNAS will be applied. The operation of such mechanisms, described for the OBSIM method also applies to this method.

The various systems of communications between the pilot and the UAV, are distinguished by the different radio frequency communications technologies used (WiFi, Bluetooth Data Link, FHSS, or any other...). The type of technology used for these communications (to establish the manual control links between the pilot and the UAV) does not form part of the object of this invention and poses no prerequisite or condition affecting the OBSPO safe control method.

UAV normally incorporate a digital video camera with the corresponding FPV transmission module. Video transmission (301) to the FPV display device, housed in the GCS (although sometimes the display device may be external), can be by high-speed radio frequency. Like the communications for manual piloting of the UAV, these communications are independent of the solution or OBSPO method.

When the UAS has been initialized, the location module (GPS in the example of the figure although any other known geo-location system can be used) will allow the UAV to position itself geographically because it receives signals from global positioning satellites (GPS) (302). The information will be collected by the UAS for later use by the CCSU, responsible for analysing the positioning data for the various control functions.

Once the identifier of the UAV (UAVID) has been built by the UAS and the pilot identifier stored (NAAVI) (303) in the UAS, the UAV will establish communications (304) with the CCSU (which may belong to a certified operator such as the company TECTECO), specifically with the Authentication Agent, so that the UAV and pilot information are checked against the records of the ASA (305). As explained above, the information that is linked to each user identifier (pilot), allows verifying (in external global databases) the real identity of the pilot, i.e. it allows guaranteeing the integrity of the pilot of the UAV, verifying that the individual is who he says.

If the authentication process is successful, the CCSU will send the notification to the UAV to continue the process with the flight authorization (306), in which the ASA will verify flight conditions for the UAV requesting authorization. This information is crosschecked with the databases of records flight privileges, characteristics of UAV, restricted or confined areas of flight or any other condition or requirement defined by the ASA (307). Compliance with the requirements means that the UAV has sufficient privileges to start flying and thus the process of active and passive monitoring of the UAV (308) will begin in which the exchange of information relating to the conditions of the flight, pilot, UAV, UAS, GCS, or any other element involved in the flight, can be analysed by the CCSU. Events and activity records stipulated by the legal conditions of the ASA will be stored in the DB of the CCSU designed for this purpose (309). In certain embodiments (which, for example, use the OBSIM method) as part of this active monitoring, the UAV can tell the CCSU which base station it is connected to (is serving).

### Semi-band spontaneous control method (SBSPO):

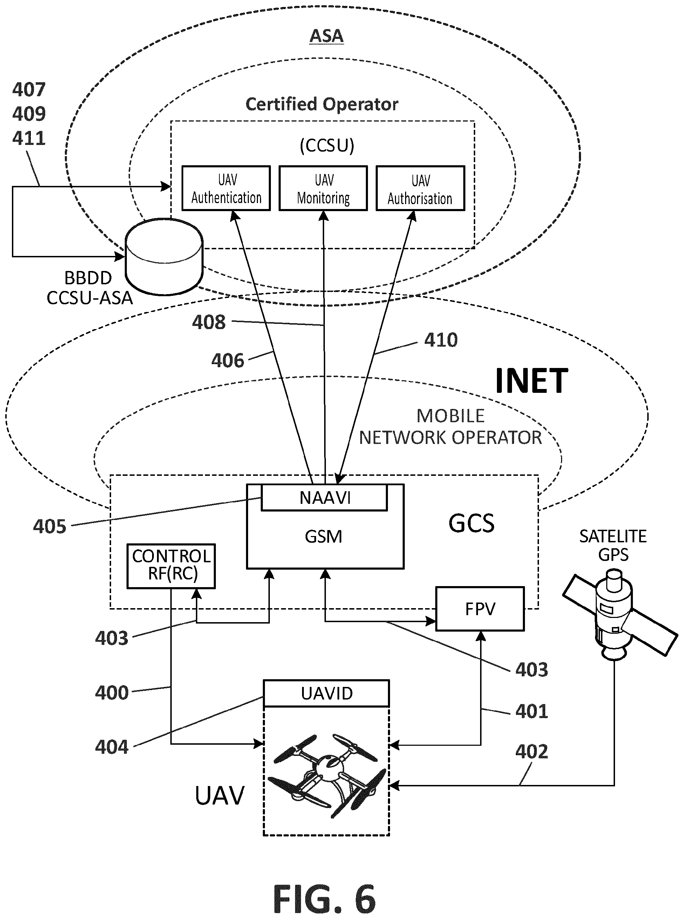

The following explains in more detail the functional description of the process of Safe Control of UAV proposed in the present invention under the semi-band spontaneous communications method called SBSPO. This method is characterized by establishing communications with Centralized Control Systems of UAVs (CCSU) by means of data connections using the mobile communications module (GSM, GPRS, EDGE, UMTS, HSDPA, LTE or any other mobile technology used) incorporated in the user device (GCS) or FPV device. Figure 6 shows a diagram of the architecture and operation of the mechanism proposed in this case.

Once the UAS and the system incorporating the GCS (Ground Control System) have started, the control process will begin with the first communications (400) for establishing the UAV-Pilot link for manual piloting of the aerial vehicle by the different systems provided by the UAV manufacturer.

In this method, the SDHCP mechanism (if for communication between the controller device and the UAS it is necessary to establish a communications network) and the UNAS authentication mechanism, described for OBSIM embodiment, will also be used. During the initial configuration the SDHCP and UNAS safety parameters for accessing the UAV will be configured and whenever the user wants to establish a communication network with the UAV or wants to access it, the controls defined in SDHCP and UNAS will be applied. The operation of such mechanisms, described for the OBSIM method also applies to this method.

The various systems of communications between the pilot and the UAV, are distinguished by the different radio frequency communications technologies used (WiFi, Bluetooth Data Link, FHSS, or any other...). The type of technology used for these communications does not form part of the object of this invention and poses no prerequisite or condition affecting the SBSPO safe control method.

Video transmission (401) to the FPV display device, housed in the GCS (although sometimes the display device may be external), can be by high-speed radio frequency. For the specific case of this solution, the communication channels used to establish the manual control links or communication with the GCS may be the same as those that establish the data connections with the CCSU. This is possible because the GCS incorporates a mobile technology communications module via which connections of exclusive data of the safe control process of the UAV (403) can be routed/readdressed/tunnelled. That is, the GCS is used as an intermediary between the UAV and the CCSU, so that although the UAV does not have access to the mobile network, it can communicate with the CCSU. For this, the messages received by the GCS by the UAV (via for example a WiFi or Bluetooth network) destined for the CCSU, the GCS transmits them to the CCSU using the mobile network and vice versa, thus establishing a communication tunnel between the UAV and the CCSU. The GCS can do this routing of connections it receives from the UAV to the CCSU (and vice versa), by NAT forwarding (Network Address Translation), i.e., translating the private IP address of the communications network between the UAV and the GCS (which has been assigned using the SDHCP protocol) to the public IP address used in the mobile network that communicates the GCS and the CCSU. Having obtained such end-to-end connectivity between the UAV and the CCSU, this SBSPO method is similar to those that use direct communication between UAV and CCSU (such as OBSPO).

When the UAS has been initialized, the location module (GPS in the example of the figure although any other known geo-location system can be used) will allow the UAV to position itself geographically because it receives signals from global positioning satellites (GPS) (402) satellites. The information will be collected by the UAS for later use by the CCSU, responsible for analysing the positioning data for the various control functions.

The identifier of the UAV (UAVID) will be built in the UAS (404) while the pilot identifier (NAAVI) (405) will be validated and duly recorded in the system, which incorporates the UAV, of the previously described UNAS authentication. The UAV can establish communications with the CCSU thanks to the re-routing (tunnelling) of connections in the GCS (406), specifically first with the authentication agent of the ASA, so that the information of the UAV and pilot are checked against the ASA records (407).

If the authentication process in the CCSU is successful, the CCSU will send the notification to the UAV, tunnelling communications by the GCS, to continue the process with the flight authorization (408), in which the ASA will verify flight conditions for the UAV which requests authorization. This information is crosschecked with the databases of records flight privileges, characteristics of UAV, restricted or confined areas of flight or any other condition or requirement defined by the ASA (409). Compliance with the requirements means that the UAV has sufficient privileges to start flying and thus the process of active and/or passive monitoring of the UAV (410) will begin in which the exchange of information relating to the conditions of the flight, pilot, UAV, UAS, GCS, or any other element involved in the flight, can be analysed by the CCSU. Events and activity records stipulated by the legal conditions of the ASA will be stored in the DB of the CCSU designed for this purpose (411).

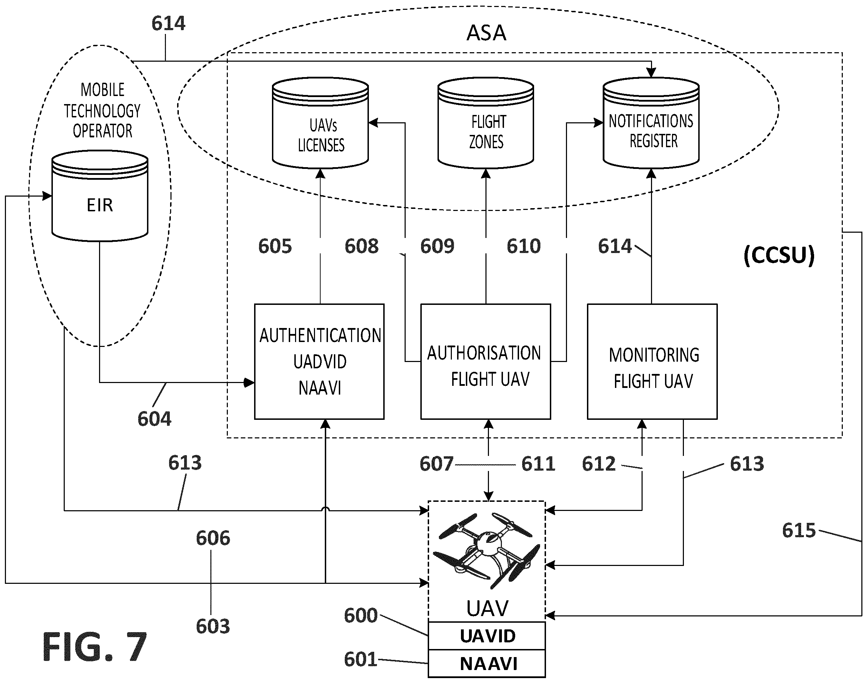

Having explained the operation of the safe control process of the present invention for each of the embodiments (communications options) proposed, the process carried out in the Centralized Control System of UAVs, CCSU, will be explained in greater detail, and the relationship between the different flows of information to be stored and collated; this will help to get a better idea of the functioning of the overall system. For this, Figure 7 will be used, which schematically illustrates the functional process carried out by the CCSU and each of the objects (systems, internal and external agents, databases, etc.) involved.

One of the first actions carried out in the control process of the UAV is the construction by the UAV (or more specifically by the UAS) of the identifier of the UAV, called UAVID (600). Additionally, the UAV will have registered the unique user identifier or controller, called NAAVI (601). The UAV will send these identifiers to the CCSU (603) through the different communications methods (OBSPO, OBSPO and SBSPO) for verification regarding the user/controller/pilot of the UAV and identification of the UAV previously registered when prosecuting the flight licence in the ASA. In the event that the OBSIM method is used, the EIR will send to the CCSU authentication agent, the identifiers registered in the mobile services provider network (604). Subsequently the CCSU authentication agent looks up in the database of the licences registered by the ASA (605) in which the characteristics of the UAV and privileges of the user/controller of the UAV have been registered. After verifying the identity of the UAV device and User/Controller, the CCSU authentication agent sends a response directly to the UAV (OBSPO and SMSPO option) or to the EIR (OBSIM option) indicating whether the authentication process has been successful (606).

The next step in the process is the flight authorization. For this, the UAS sends a flight authorization request (607) to the CCSU authorization agent (who has all the information on the characteristics and permissions for each UAV). In the OBSIM case, the authorization request is sent directly from the UAV to CCSU using the mobile network (during the process the CCSU may have to consult the EIR, if there is any data that needs identification of the UAV that is stored in the EIR).

The CCSU, will collate the information with records from the database of licences processed by the ASA (608) in which flight conditions have been stipulated based on the characteristics of the UAV, legal air navigation conditions and whatever the requirements of the flight to be made. In addition, the authorization agent of the CCSU will make a query in the database that has registered the exclusive flight zones (609) for each user/controller/pilot and those restricted to any type of flight. Additionally, the conditions of the flight will be checked with the conditions at that time of other flights that are being monitored to avoid potential conflicts in the airspace (610). The information with the characteristics of the flight authorization will be sent to UAV (611) by the UAS to be able to process flight information. In the authorization process, the flight may be also denied due to other safety reasons registered in the DB (Database) of events of the CCSU, such as publication of static image and dynamic image contents, theft or loss of the UAV, modification of the preloaded GPS map, altered weight of the aerial vehicle, modification UAVID or NAAVI or any other requirements and conditions set by the ASA.

Once the authorization process is completed, i.e. the conditions for the start of flight are met, the process of active and/or passive monitoring will start. The active monitoring process is the one in which the UAS sends the information temporarily of the flight to the monitoring agent of the CCSU (612), while the passive monitoring process (613) uses surveys programmed to determine the status of the UAV, from the monitoring agent of the CCSU (in OBSPO and SMSPO methods) or from the own infrastructure of the mobile technology services provider (OBSIM methods). All information collected by the monitoring agent of the CCSU or by the network operator is registered in the DB of flight events and information of flights made by the UAV (614). It should be noted that the information is processed by the CCSU (615) and further decisions may be made in real time such as the denial of a previously authorized flight, changing authorized flight zones, etc. That is, if during the monitoring process the UAV enters an area that is classified in the database as not allowed, the CCSU will send a denial of authorization to the UAV. In this situation, the UAV will remain parked in the place where it is or return to its origin.

The present invention therefore proposes a methodology (mechanism) of safe control of unmanned aerial vehicles based on authentication, authorization and monitoring of UAVs. Currently, there are no methods to establish safe and efficient control mechanisms of Unmanned Aerial Vehicles, in the way the proposed solution does and that meet the recently approved legislation by the various agencies of air navigation control to minimize their vulnerabilities and increase their safety. The main technical advantages of the proposed methodology are, among others:
- UAV-Pilot linking: The new identifiers (UAVID and NAAVI) provide unmistakable new characteristics for the authentication process of the physical device and of the individual who remotely controls the flight of the UAV. Likewise, the integration of these identifiers in air safety agency ensures the integrity of flights based on licenses issued according to the characteristics of the UAV and the permits given to the controller/pilot (physical person associated to the NAAVI user).
- Priority control of the UAV: The aviation security agent (ASA) will have greater control of airspace caused by the monitoring of the flight of each UAV in any situation, that is, the flight of a UAV that threatens air or civil security, may be intercepted by the aviation safety agent using the centralized control system.
- Centralized Control in real-time of Air Navigation: Increased security of the flight on all the air zones, including restricted zones due to the automatic synchronization between the control system and the UAV of the air zones allowed and stipulated by the Aviation Safety Agent.
- Double Level of Security: As it prevents the installation of custom firmwares that may bypass the limitations of government agencies and secondly the preloading in each flight of the base stations of the mobile technology infrastructure over which it has authorization to fly.
- Control of Access to Airspace: Due to the policies implemented in the Centralized Control System of UAVs by which the start of the air activity of the UAV may be denied.
- Advanced Security in Communications: In those communications for remote control of the UAV in which communications standards have been strengthened by limiting the use of communications to users and devices with exclusive privileges for the control and supervision of the UAV (SDHCP+UNAS+NAAVI). Validation of the controller device and of the user legitimize in a certain way control of the aerial vehicle.

Although the present invention, in most embodiments, has been described for application in unmanned aerial vehicles (with permitted and restricted air zones), that is only an application example. The mechanism described in the present invention is also applicable to other types of unmanned aerial or remotely manned vehicles, such as unmanned road vehicles or maritime vehicles (in that case, instead of air zones we would speak of land or maritime zones respectively) or of any other kind.

Note that in this text, the term "comprises" and its derivations (such as "comprising", etc.) should not be understood in a sense of exclusion, that is, these terms should not be interpreted as excluding the possibility that what is described and defined may include further elements, steps, etc.

Some preferred embodiments of the invention are described in the dependent claims, which are included below.

Having sufficiently described the nature of the invention and the way it can be carried out in practice, it should be noted that there is the possibility that the different parts can be manufactured in a variety of materials, sizes and shapes and may also allow for the introduction in its constitution and procedure, those variations that practice recommends, as long as the same do not alter the fundamental principle of the present invention.

The description and drawings merely illustrate the principles of the invention. Therefore, it should be noted that those skilled in the art may conceive various provisions which, even if not explicitly described or shown herein, represent the principles of the invention and are included within its scope. In addition, all examples described herein are provided primarily for pedagogical reasons to help the reader understand the principles of the invention and the concepts contributed by the inventor(s) to improve the technique and should be considered as non-limiting with respect to such examples and conditions described specifically. Furthermore, all the foregoing in this document related with the principles, aspects and embodiments of the invention, and specific examples thereof, cover equivalents thereof.

Although the present invention has been described with reference to specific embodiments, those skilled in the art should understand that the foregoing and various other changes, omissions and additions in form and detail may be made therein without departing from the spirit and scope of the invention as defined by the following claims.

## Claims

1. A method for controlling navigation of an unmanned vehicle (201), wherein the method comprises:
a) establishing a communication between an electronic device (200) for piloting the vehicle, called ground control station GCS, and the vehicle (201);
b) if the communication has been successfully established, the vehicle (201) receiving from the GCS (200) a request to access the vehicle (201) and a GCS identifier (200);
c) authenticating in the vehicle an user (100) of the GCS (200) from at least the user (100) identifier and of the GCS identifier received from the GCS and if the authentication has not been successful, denying access to the vehicle to said user and ending the method;
d) receiving in a server called Centralized Control System of Unmanned Vehicles, CCSU, through a mobile communications network, a vehicle (201) identifier and the user (100) identifier;
e) authenticating in the CCSU the user and the vehicle based at least on their identifiers and if this authentication has been successful, sending a successful authentication response from the CCSU to the vehicle and if the authentication has not been successful, ending the method;
f) the CCSU receiving (607) a request for authorisation of the vehicle (201), including the characteristics of the trajectory for which the vehicle is requesting authorization, the CCSU determining if said route is authorized and if it is authorized, sending an authorized trajectory message to the vehicle and monitoring the trajectory of the vehicle and if it has not been authorized, ending the method;
g) if during the monitoring of the trajectory, any trajectory condition not allowed by the CCSU occurs, the CCSU sending a message to the vehicle refusing the authorization for the trajectory.

2. The method according to Claim 1, wherein step c) of authenticating the user in the vehicle, comprises:
- checking if the user identifier is displayed in a vehicle's database as an authorized user identifier;
- receiving from the GCS a password for this user and checking if the password received corresponds to the one linked to said user in the database;
- checking if the GCS identifier appears in the database as linked to said user identifier;
wherein authentication is successful if all the checks are positive.

3. The method according to any of the preceding claims wherein communications between the vehicle and the CCSU are made through the mobile communications network and wherein step d) comprises:
- receiving at a base station of the mobile communications network, vehicle identification parameters, among which are the vehicle identifier and the user identifier;
- said base station sending said parameters to network elements of the mobile communications network;
- the mobile network authenticating the vehicle from the identification parameters received and if said authentication is unsuccessful, denying access to the mobile network to the vehicle and ending the method;
- if the authentication is successful, sending from a network element of the mobile communications network to the CCSU, the vehicle identifier and the user identifier;
wherein, in step e), the message that the authentication is successful in the CCSU is sent by the CCSU to the network element and from the network element to the vehicle
and wherein, the step of monitoring the trajectory of the vehicle comprises the CCSU collecting information on the position of the vehicle from at least one network element from the mobile network.

4. The method according to claim 3, wherein the vehicle uses a SIM card to be able to access the mobile communications network and wherein said identification parameters also include identification parameters of the SIM of the vehicle and said identification parameters of the SIM of the vehicle are also sent to the CCSU by the network element of the mobile communications network.

5. The method according to any of the preceding claims 1-2, wherein communications between the vehicle and the GCS are made via a first communications network and communications between the GCS and the CCSU are made via a mobile communications network, and wherein all communications between the vehicle and the CCSU are through the GCS, so that the GCS receives messages from the vehicle destined for the CCSU through the first communications network and the GCS transmits them to the CCSU via the mobile communications network.

6. The method according to any of the preceding claims 1-2, wherein communications between the vehicle and the GCS are made via a first communications network and communications between the vehicle and the CCSU are performed directly through the mobile communications network.

7. The method according to any of the preceding claims, wherein the vehicle identifier is a unique vehicle identifier, UAVID, made up by the vehicle and that is based on at least one of the following parameters: country of manufacture, the vehicle manufacturer, the vehicle serial number, a verification code of the vehicle and wherein the user identifier is a unique vehicle controller identifier, NAAVI.

8. The method according to any of the preceding claims, wherein communications between the GCS (200) and the vehicle (201) are performed through a communications network, and step a) comprises:
a1) receiving from the electronic device, a layer 2 message of the OSI model, requesting configuration parameters of the network, where this message includes an electronic device, GCS, identifier;
a2) if the device identifier is registered in a database of the vehicle as a device identifier with permitted access, assigning to the device a set of configuration parameters of the network based on the device identifier, said set of network configuration parameters including a network address for the device; if the device identifier is not registered in the database of the vehicle as a device identifier with permitted access, ending the method;
a3) sending a layer 2 message of the OSI model to the device with the configuration parameters of the network assigned to the device.

9. The method according to any of the preceding claims, wherein the step of monitoring the trajectory of the vehicle by the CCSU comprises:
- the vehicle collecting position and navigation information;
- the vehicle sending the position and navigation information collected to the CCSU periodically and/or when certain navigation events occur and/or when the vehicle receives a position and navigation information request message from the CCSU.

10. The method according to claim 9, wherein the position and navigation information collected by the vehicle include the base station of the mobile network that is serving the vehicle.

11. The method according to any of the preceding claims, wherein the method also comprises:
- receiving from the CCSU the list of authorized base stations of the mobile network;
- the vehicle detecting the base station which is serving it at all times, and if said base station is not on the list of authorized base stations, sending the CCSU a message informing it of this.

12. A system for the control of navigation of an unmanned vehicle (201) comprising:
an electronic device (200) for piloting the vehicle called ground control station, GCS, which comprises:
- means for establishing a communication between the GCS and the vehicle (201);
- means for sending to the vehicle (201) a request to access to the vehicle and a GCS identifier if the communication has been successfully established;
The UAV (201) comprises:
- means for authenticating in the vehicle a user (100) of the GCS (200) from at least the user identifier (100) and the GCS identifier received from the GCS;
- means for sending to a server called Centralized Control System of unmanned vehicles, CCSU, through a mobile communications network, a vehicle identifier (201) and the user identifier (100) if authentication has been successful;
- means for sending to the CCSU a request for authorization, including the characteristics of the trajectory for which the vehicle requests authorization if a message of successful authentication is received from the CCSU;
The CCSU comprises:
- means for receiving the vehicle (201) identifier and the user (100) identifier via the mobile communications network;
- means for authenticating the user and the vehicle based at least on their identifiers;
- means for sending a response of successful authentication from the CCSU to the vehicle if authentication has been successful;
- means for receiving, if authentication has been successful, the request for authorization of the vehicle (201), for determining if said trajectory is an authorized trajectory and, if it is determined that the trajectory is authorized, for sending an authorized trajectory message to the vehicle;
- means for monitoring the trajectory of the vehicle and check whether during monitoring of the trajectory any trajectory condition not allowed by the CCSU occurs and, if so, the CCSU sending a message to the vehicle refusing it authorization of the trajectory.

13. An unmanned vehicle (201) comprising:
- means for receiving from an electronic device (200) for piloting of the vehicle, called ground control station, GCS, a request to access to the vehicle and a GCS identifier;
- means for authenticating in the vehicle a user (100) of the GCS (200) from at least the user (100) identifier and the GCS identifier received from the GCS;
- means for sending to a server called Centralized Control System of unmanned vehicles, CCSU, through a mobile communications network, a vehicle identifier (201) and the user identifier (100) if authentication has been successful;
- means for receiving from the CCSU the result of an authentication based on at least the vehicle identifier (201) and the user identifier (100) and, if this authentication has been successful, sending to the CCSU an authorization request, including the characteristics of the trajectory for the vehicle requesting authorization;
- means for receiving from the CCSU an authorized trajectory message or a message from the CCSU to the vehicle refusing authorization of the trajectory.

14. The vehicle according to Claim 13 wherein the vehicle also comprises:
- means for collecting position and navigation information;
- means for sending collected position and navigation information to the CCSU periodically and/or when certain navigation events occur and/or when the vehicle receives a position and navigation information request message from the CCSU.

15. The vehicle according to any of Claims 13 or 14, wherein the vehicle comprises:
- means for, if it receives a message of refused trajectory from the CCSU, remaining parked on land at the site where it is at that moment or returning to the point of origin of the trajectory.

16. A server for the control of navigation of an unmanned vehicle (201), comprising:
- means for receiving, through a mobile communications network, a vehicle (201) identifier and an identifier of the user (100) of a device for piloting the vehicle;
- means for authenticating the user and the vehicle based at least on their identifiers;
- means for sending a response of successful authentication from the CCSU to the vehicle if authentication has been successful;
- means for receiving a request for authorization of trajectory of the vehicle (201) and for determining if said trajectory is authorized and for, if it is determined that the trajectory is authorized, sending an authorized trajectory message to the vehicle;
- means for monitoring the trajectory of the vehicle and if during monitoring the trajectory any trajectory condition occurs not allowed by the CCSU, sending a message to the vehicle to deny it trajectory authorization.

17. A non-transitory digital data storage medium for storing a computer program that comprises computer executable instructions that cause a computer running the program to implement the method according to any of claims 1-11.

## Patentansprüche

1. Verfahren zur Steuerung einer Navigation eines unbemannten Fahrzeugs (201), wobei das Verfahren aufweist:
a) Aufbauen einer Kommunikation zwischen einer elektronischen Vorrichtung (200) zur Führung des Fahrzeugs, genannt Bodenkontrollstation (GCS), und dem Fahrzeug (201);
b) falls die Kommunikation erfolgreich hergestellt wurde, Empfangen einer Anfrage zum Zugriff auf das Fahrzeug (201) und einer Kennung der GCS (200) von der GCS (200) durch das Fahrzeug (201);
c) Authentifizieren eines Nutzers (100) der GCS (200) im Fahrzeug durch zumindest die Benutzerkennung (100) und die GCS-Kennung, empfangen von der GCS, und bei nicht erfolgreicher Authentifizierung Zugriffsverweigerung zum Fahrzeug für den Nutzer und Beendigung des Verfahrens;
d) Empfangen einer Fahrzeugkennung (201) und der Nutzerkennung (100) in einem Server, genannt Zentralisiertes Kontrollsystem Unbemannter Fahrzeuge, CSSU, durch ein mobiles Kommunikationsnetzwerk;
e) Authentifizieren in dem CCSU des Nutzers und des Fahrzeugs basierend auf zumindest ihrer Kennungen und, falls diese Authentifizierung erfolgreich war, Senden einer Erfolgreich-Authentifiziert Antwort von dem CCSU an das Fahrzeug und, falls die Authentifizierung nicht erfolgreich war, Beendigung des Verfahrens;
f) Empfang (607) einer Anfrage zur Autorisierung des Fahrzeugs (201) durch das CCSU, einschließlich der Charakteristiken der Trajektorie für die das Fahrzeug Autorisierung anfragt, wobei durch das CCSU, falls genannte Route autorisiert wird und falls sie autorisiert ist, Senden einer Autorisierte-Trajektorie Nachricht an das Fahrzeug und Überwachen der Trajektorie des Fahrzeugs, und falls sie nicht autorisiert wurde, Beenden des Verfahrens;
g) falls während der Überwachung der Trajektorie irgendein durch das CCSU nicht erlaubter Trajektorie-Zustand auftritt, Versenden einer Nachricht durch das CCSU zur Ablehnung der Autorisierung für die Trajektorie an das Fahrzeug.

2. Verfahren nach Anspruch 1, wobei Schritt c) der Authentifizierung des Nutzers im Fahrzeug, aufweist:
- Prüfen ob die Nutzerkennung in einer Datenbank des Fahrzeugs als Autorisierter-Nutzer-Kennung angeführt ist;
- Empfangen eines Passworts für diesen Nutzer von der GCS und Prüfen, ob das empfangene Passwort mit dem des genannten Nutzers in der Datenbank korrespondiert;
- Prüfen ob die GCS-Kennung in der Datenbank als verknüpft mit genanntem Nutzer erscheint;
wobei die Authentifizierung erfolgreich ist, falls alle Überprüfungen positiv sind.

3. Verfahren nach einem der vorhergehenden Ansprüche, wobei Kommunikationen zwischen dem Fahrzeug und dem CCSU durch das mobile Kommunikationsnetz hergestellt werden und wobei Schritt d) aufweist:
- Empfangen an einer Basisstation des mobilen Kommunikationsnetzwerks Fahrzeugidentifikations-Parameter, unter denen die Fahrzeugkennung und die Nutzerkennung sind;
- Senden genannter Parameter an Netzwerkelemente des mobilen Kommunikationsnetzwerks durch die Basisstation;
- Authentifizieren durch das mobile Netzwerk des Fahrzeugs anhand der empfangenen Identifikations-Parameter und, falls genannte Authentifizierung fehlschlägt, Verweigerung des Zugriffs des Fahrzeugs zum mobilen Netz und Beendigung des Verfahrens;
- falls die Authentifizierung erfolgreich ist, Senden der Fahrzeugkennung und Nutzerkennung von einem Netzwerkelement des mobilen Kommunikationsnetzes aus an das CCSU;
wobei in Schritt e) die Nachricht, dass die Authentifizierung in dem CCSU erfolgreich ist, durch das CCSU an das Netzwerkelement und vom Netzwerkelement an das Fahrzeug gesendet wird,
und wobei der Schritt der Überwachung der Trajektorie des Fahrzeugs das Sammeln von Informationen über die Position des Fahrzeugs durch zumindest ein Netzwerkelement des mobilen Netzwerks aufweist.

4. Verfahren nach Anspruch 3, worin das Fahrzeug eine SIM Karte benutzt, um in der Lage zu sein, auf das mobile Kommunikationsnetzwerk zuzugreifen, und worin die Identifikations-Parameter auch Identifikations-Parameter der SIM des Fahrzeugs beinhalten, und die Identifikations-Parameter der SIM des Fahrzeugs auch an das CCSU durch das Netzwerkelement des mobilen Kommunikationsnetzes gesendet werden.

5. Verfahren nach einem der der vorhergehenden Ansprüche 1 bis 2, wobei Kommunikationen zwischen dem Fahrzeug und der GCS über ein erstes Kommunikationsnetzwerk hergestellt werden und Kommunikationen zwischen der GCS und dem CCSU über ein mobiles Kommunikationsnetzwerk hergestellt werden und worin alle Kommunikationen zwischen dem Fahrzeug und dem CCSU durch das GCS laufen, so dass das GCS für das CCSU bestimmte Nachrichten von dem Fahrzeug durch das erste Kommunikationsnetzwerk empfängt und das GCS sie an das CCSU über das mobile Kommunikationsnetzwerk überträgt.

6. Verfahren nach einem der vorhergehenden Ansprüche 1 bis 2, wobei Kommunikationen zwischen dem Fahrzeug und der GCS über ein erstes Kommunikationsnetzwerk hergestellt werden und Kommunikationen zwischen dem Fahrzeug und dem CCSU direkt durch das mobile Kommunikationsnetzwerk ausgeführt werden.

7. Verfahren nach einem der vorhergehenden Ansprüchen, wobei die Fahrzeugkennung eine einzigartige Fahrzeugkennung UAVID ist, welche durch das Fahrzeug und basierend auf zumindest einem der folgenden Parameter erzeugt wird: Land der Herstellung, Hersteller des Fahrzeugs, Seriennummer des Fahrzeugs, ein Verifikationscode des Fahrzeugs und wobei die Benutzerkennung eine einzigartige Fahrzeug-Steuerungs-Kennung NAAVI ist.

8. Verfahren nach einem der vorhergehenden Ansprüche, wobei Kommunikationen zwischen der GCS (200) und dem Fahrzeug (201) durch ein Kommunikationsnetzwerk ausgeführt werden und Schritt a) aufweist:
a1) Empfangen einer Schicht 2 Nachricht des OSI Modells von dem elektronischen Gerät zur Anfrage von Konfigurationsparametern des Netzwerks, wobei diese Nachricht eine Elektronisches-Gerät (GCS)-Kennung beinhaltet;
a2) falls die Gerätekennung in der Datenbank des Fahrzeugs als Gerätekennung mit erlaubtem Zugriff registriert ist, Zuweisen einer Menge von Konfigurationsparametern des Netzwerks basierend auf der Gerätekennung an das Gerät, wobei diese Menge an Netzwerkkonfigurations-Parametern eine Netzwerkadresse des Geräts enthalten; falls die Gerätekennung nicht in der Datenbank des Fahrzeugs als Gerätekennung mit erlaubtem Zugriff registriert ist, Beenden des Verfahrens;
a3) Senden einer Schicht 2 Nachricht des OSI Modells an das Gerät mit den dem Gerät zugeordneten Konfigurationsparametern des Netzwerks.

9. Verfahren nach einem der vorhergehenden Ansprüche, wobei der Schritt zur Überwachung der Trajektorie des Fahrzeugs durch die CCSU aufweist:
- Sammeln von Positions- und Navigationsinformationen durch das Fahrzeug;
- Senden der Positions- und Navigationsinformationen periodisch und/oder, wenn bestimmte Navigationsereignisse auftreten und/oder wenn das Fahrzeug eine Nachricht zur Anfrage von Positions- und Navigationsinformationen erhält, gesammelt durch die CCSU.

10. Verfahren nach Anspruch 9, wobei die Positions- und Navigationsinformationen gesammelt durch das Fahrzeug die Basisstation des Mobilen Netzes, welches das Fahrzeug nutzt, beinhält.

11. Verfahren nach einem der vorherigen Ansprüche, wobei das Verfahren auch aufweist:
- Empfangen der Liste der autorisierten Basisstationen des mobilen Netzes von der CCSU;
- Erkennen der zu jeder Zeit zuständigen Basisstation durch das Fahrzeug und, falls diese Basisstation nicht in der Liste der autorisierten Basisstationen ist, Senden einer Nachricht an die CCSU, um diese darüber zu informieren.

12. System zur Steuerung der Navigation eines unbemannten Fahrzeugs (201) aufweisend:
ein elektronisches Gerät (200) zur Steuerung des Fahrzeugs genannt Bodenkontrollstation, GCS, welche aufweist:
- Mittel zur Herstellung einer Kommunikation zwischen der GCS und dem Fahrzeug (201);
- Mittel zum Senden einer Anfrage an das Fahrzeug (201) nach Zugriff zum Fahrzeug und einer GCS-Kennung, falls die Kommunikation erfolgreich hergestellt wurde;
das UAV (201) weist auf:
- Mittel zur Authentifizierung eines Nutzers (100) der GCS (200) durch zumindest die Benutzerkennung (100) und die GCS-Kennung empfangen von der GCS;
- Mittel zum Senden an einen Server genannt Zentralisiertes Kontrollsystem Unbemannter Fahrzeuge, CCSU, durch ein mobiles Kommunikationsnetzwerk, eine Fahrzeugkennung (201) und die Benutzerkennung (100), falls die Authentifizierung erfolgreich war;
- Mittel zum Senden einer Anfrage zur Autorisierung an die CCSU, einschließlich die Charakteristiken der Trajektorie, für die das Fahrzeug Autorisierung anfrägt, falls eine Nachricht über die erfolgreiche Authentifizierung von dem CCSU empfangen wurde;
das CCSU weist auf:
- Mittel zum Empfangen der Fahrzeug (201) - Kennung und der Nutzer (100) - Kennung über das mobile Kommunikationsnetzwerk;
- Mittel zur Authentifizierung des Nutzers und des Fahrzeugs basierend auf zumindest ihrer Kennungen;
- Mittel zum Senden einer Authentifizierung-Erfolgreich Antwort von dem CCSU an das Fahrzeug, falls die Authentifizierung erfolgreich war;
- Mittel zum Empfangen, falls die Authentifizierung erfolgreich war, der Anfrage nach Autorisierung des Fahrzeugs (201) zum Bestimmen, ob die Trajektorie eine autorisierte Trajektorie ist und, wenn dies bestimmt ist, dass die Trajektorie autorisiert ist zum Senden einer Autorisierte-Trajektorie Nachricht an das Fahrzeug;
- Mittel zur Überwachung der Trajektorie des Fahrzeugs und Prüfen, ob während der Überwachung der Trajektorie irgendein durch das CCSU nicht erlaubter Trajektorie-Zustand auftritt und, falls doch, Senden einer Nachricht durch das CCSU über die Ablehnung der Autorisierung der Trajektorie an das Fahrzeug.

13. Unbemanntes Fahrzeug (201), aufweisend:
- Mittel zum Empfang einer Anfrage zum Zugriff auf auf das Fahrzeug und einer GCS-Kennung von einem elektronischen Gerät (200) zur Steuerung des Fahrzeugs;
- Mittel zur Authentifizierung eines Nutzers (100) der GCS (200) im Fahrzeug durch zumindest die Nutzer (100) - Kennung und die GCS-Kennung, empfangen von der GCS;
- Mittel zum Senden einer Fahrzeugkennung (201) und einer Nutzerkennung (100) an einen Server, genannt Zentralisiertes Kontrollsystem Unbemannter Fahrzeuge, CCSU, durch ein mobiles Kommunikationsnetzwerk, falls die Authentifizierung erfolgreich war;
- Mittel zum Empfang des Ergebnisses einer Authentifizierung basierend auf zumindest der Fahrzeugkennung (201) und der Nutzerkennung (100) und, falls die Authentifikation erfolgreich war, Senden einer Autorisierungsanfrage einschließlich der Charakteristiken der Trajektorie für das eine Autorisierung anfragende Fahrzeug an das CCSU;
- Mittel zum Empfang einer Autorisierte-Trajektorie Nachricht von dem CCSU oder eine Nachricht zur Ablehnung der Autorisierung der Trajektorie von dem CCSU.

14. Fahrzeug nach Anspruch 13, wobei das Fahrzeug auch aufweist:
- Mittel zum Sammeln von Positions- und Navigationsinformationen;
- Mittel zum Senden gesammelter Positions- und Navigationsinformationen zu dem CCSU periodisch und/oder wenn bestimmte Navigationszustände auftreten und/oder wenn das Fahrzeug eine Anfrage nach Positions- und Navigationsinformationen von dem CCSU empfängt.

15. Fahrzeug nach einem der Ansprüche 13 oder 14, wobei das Fahrzeug aufweist:
- Mittel um, falls es eine Trajektorie-Abgelehnt Nachricht von dem CCSU empfängt, geparkt auf dem Ort an der Stelle verbleibt, auf dem es sich im Moment befindet, oder zum Ursprungspunkt der Trajektorie zurückzukehren.

16. Server zur Kontrolle eines unbemannten Fahrzeugs (201), aufweisend:
- Mittel zum Empfangen einer Fahrzeug (201) - kennung und die Kennung eines Nutzers (100) einer Vorrichtung zur Führung des Fahrzeugs durch ein mobiles Kommunikationsnetz;
- Mittel zur Authentifizierung des Nutzers und des Fahrzeugs basierend auf zumindest derer Kennungen;
- Mittel zum Senden einer erfolgreich-authentifiziert Antwort von dem CCSU an das Fahrzeug, falls die Authentifizierung erfolgreich war;
- Mittel zum Empfangen einer Anfrage zur Autorisierung der Trajektorie des Fahrzeugs (201) und zur Bestimmung, ob die Trajektorie autorisiert und zum, falls bestimmt ist, dass die Trajektorie autorisiert ist, Senden einer Trajektorie-Nachricht an das Fahrzeug;
- Mittel zur Überwachung der Trajektorie des Fahrzeugs und, falls während der Überwachung der Trajektorie irgendein Trajektoriezustand auftritt, welcher von dem CCSU nicht erlaubt ist, Senden einer Nachricht an das Fahrzeug, um die Trajektorie-Autorisierung abzulehnen.

17. Ein nicht-flüchtiges digitales Datenspeichermedium zur Speicherung eines Computerprogramms, welches durch den Computer ausführbare Instruktionen aufweist, die einen Computer das Programm ausführen lassen, um das Verfahren nach einem der Ansprüche 1 bis 11 zu implementieren.

## Revendications

1. Procédé pour contrôler la navigation d'un véhicule sans pilote (201), dans lequel le procédé comprend:
a) établir une communication entre un dispositif électronique (200) pour piloter le véhicule, appelé poste de commande au sol GCS, et le véhicule (201);
b) si la communication a été établie avec succès, le véhicule (201) reçoit du GCS (200) une demande d'accès au véhicule (201) et un identifiant GCS (200);
c) authentifier dans le véhicule un utilisateur (100) du GCS (200) à partir d'au moins l'identifiant de l'utilisateur (100) et de l'identifiant GCS reçu du GCS et si l'authentification n'a pas réussi, refuser l'accès au véhicule audit utilisateur et mettre fin au procédé;
d) recevoir dans un serveur appelé Système de contrôle centralisé des véhicules sans pilote (CCSU), via un réseau de communication mobile, un identifiant de véhicule (201) et l'identifiant de l'utilisateur (100);
e) authentifier dans le CCSU l'utilisateur et le véhicule sur la base au moins de leurs identifiants et si cette authentification a réussi, envoyer une réponse d'authentification réussie du CCSU au véhicule et si l'authentification n'a pas réussi, mettre fin au procédé;
f) le CCSU reçoit (607) une demande d'autorisation du véhicule (201), y compris les caractéristiques de la trajectoire pour laquelle le véhicule demande une autorisation, le CCSU déterminant si ledit itinéraire est autorisé et s'il est autorisé, envoyer un message de trajectoire autorisée au véhicule et suivre la trajectoire du véhicule et s'il n'a pas été autorisé, mettre fin au procédé;
g) si lors du suivi de la trajectoire, une condition de trajectoire non autorisée par le CCSU se produit, le CCSU envoie un message au véhicule refusant l'autorisation de la trajectoire.

2. Procédé selon la revendication 1, dans lequel l'étape c) d'authentification de l'utilisateur dans le véhicule, comprend:
- vérifier si l'identifiant de l'utilisateur est affiché dans la base de données d'un véhicule comme identifiant de l'utilisateur autorisé;
- recevoir du GCS un mot de passe pour cet utilisateur et vérifier si le mot de passe reçu correspond à celui lié audit utilisateur dans la base de données;
- vérifier si l'identifiant GCS apparaît dans la base de données comme lié audit identifiant de l'utilisateur,
dans lequel l'authentification est réussie si tous les contrôles sont positifs.

3. Procédé selon l'une quelconque des revendications précédentes, dans lequel les communications entre le véhicule et le CCSU sont effectuées via le réseau de communication mobile et dans lequel l'étape d) comprend:
- réceptionner au niveau d'une station de base du réseau de communication mobile, des paramètres d'identification du véhicule, parmi lesquels l'identifiant du véhicule et l'identifiant de l'utilisateur;
- ladite station de base envoie lesdits paramètres aux éléments de réseau du réseau de communication mobile;
- le réseau mobile authentifie le véhicule à partir des paramètres d'identification reçus et si ladite authentification échoue, refuser l'accès au réseau mobile au véhicule et mettre fin au procédé;
- si l'authentification est réussie, envoyer un élément de réseau du réseau de communication mobile vers le CCSU, l'identifiant du véhicule et l'identifiant de l'utilisateur;
dans lequel, à l'étape e), le message que l'authentification est réussie dans le CCSU est envoyé par le CCSU à l'élément de réseau et de l'élément de réseau au véhicule
et dans lequel, l'étape de suivi de la trajectoire du véhicule comprend le CCSU collectant des informations sur la position du véhicule à partir d'au moins un élément de réseau du réseau mobile.

4. Procédé selon la revendication 3, dans lequel le véhicule utilise une carte SIM pour pouvoir accéder au réseau de communication mobile et dans lequel lesdits paramètres d'identification incluent également des paramètres d'identification de la SIM du véhicule et lesdits paramètres d'identification de la SIM du véhicule sont également envoyés au CCSU par l'élément de réseau du réseau de communication mobile.

5. Procédé selon l'une quelconque des revendications 1 à 2 précédentes, dans lequel les communications entre le véhicule et le GCS sont effectuées via un premier réseau de communication et les communications entre le GCS et le CCSU sont effectuées via un réseau de communication mobile, et dans lequel toutes les communications entre le véhicule et le CCSU passent par le GCS, de sorte que le GCS reçoit des messages du véhicule destinés au CCSU via le premier réseau de communication et le GCS les transmet au CCSU via le réseau de communication mobile.

6. Procédé selon l'une quelconque des revendications 1 à 2 précédentes, dans lequel les communications entre le véhicule et le GCS sont effectuées via un premier réseau de communication et les communications entre le véhicule et le CCSU sont effectuées directement via le réseau de communication mobile.

7. Procédé selon l'une quelconque des revendications précédentes, dans lequel l'identifiant de véhicule est un identifiant de véhicule unique, UAVID, constitué par le véhicule et qui est basé sur au moins l'un des paramètres suivants: pays de fabrication, constructeur du véhicule, numéro de série du véhicule, un code de vérification du véhicule et dans lequel l'identifiant de l'utilisateur est un identifiant unique de commande de véhicule, NAAVI.

8. Procédé selon l'une quelconque des revendications précédentes, dans lequel les communications entre le GCS (200) et le véhicule (201) sont effectuées via un réseau de communication, et l'étape a) comprend:
a1) recevoir du dispositif électronique, un message de couche 2 du modèle OSI, demandant les paramètres de configuration du réseau, où ce message comprend un dispositif électronique, un GCS, un identifiant;
a2) si l'identifiant de l'appareil est enregistré dans une base de données du véhicule en tant qu'identifiant de l'appareil avec un accès autorisé, attribuer à l'appareil un ensemble de paramètres de configuration du réseau sur la base de l'identifiant de l'appareil, ledit ensemble de paramètres de configuration de réseau incluant une adresse réseau pour l'appareil; si l'identifiant de l'appareil n'est pas enregistré dans la base de données du véhicule comme identifiant de l'appareil avec un accès autorisé, mettre fin au procédé;
a3) envoyer un message de couche 2 du modèle OSI à l'appareil avec les paramètres de configuration du réseau attribués à l'appareil.

9. Procédé selon l'une quelconque des revendications précédentes, dans lequel l'étape de suivi de la trajectoire du véhicule par le CCSU comprend:
- le véhicule collectant des informations de position et de navigation;
- le véhicule envoyant périodiquement les informations de position et de navigation collectées au CCSU et / ou lorsque certains événements de navigation se produisent et / ou lorsque le véhicule reçoit un message de demande d'informations de position et de navigation du CCSU.

10. Procédé selon la revendication 9, dans lequel les informations de position et de navigation collectées par le véhicule incluent la station de base du réseau mobile qui dessert le véhicule.

11. Procédé selon l'une quelconque des revendications précédentes, dans lequel le procédé comprend également:
- recevoir depuis le CCSU la liste des stations de base autorisées du réseau mobile;
- le véhicule détecte la station de base qui la dessert à tout moment, et si ladite station de base ne figure pas sur la liste des stations de base autorisées, envoyer au CCSU un message l'informant de cela.

12. Système de commande de navigation d'un véhicule sans pilote (201) comprenant:
un dispositif électronique (200) de pilotage du véhicule appelé poste de commande au sol, GCS, qui comprend:
- des moyens pour établir une communication entre le GCS et le véhicule (201);
- des moyens pour envoyer au véhicule (201) une demande d'accès au véhicule et un identifiant GCS si la communication a été établie avec succès;
L'UAV (201) comprend:
- des moyens pour authentifier dans le véhicule un utilisateur (100) du GCS (200) à partir d'au moins l'identifiant de l'utilisateur (100) et l'identifiant GCS reçu du GCS;
- des moyens pour envoyer à un serveur appelé Système de Contrôle Centralisé des véhicules sans pilote, CCSU, via un réseau de communication mobile, un identifiant de véhicule (201) et l'identifiant de l'utilisateur (100) si l'authentification a réussi;
- des moyens pour envoyer au CCSU une demande d'autorisation, incluant les caractéristiques de la trajectoire pour laquelle le véhicule demande l'autorisation si un message d'authentification réussie est reçu du CCSU;
Le CCSU comprend:
- des moyens pour recevoir l'identifiant de véhicule (201) et l'identifiant de l'utilisateur (100) via le réseau de communication mobile;
- des moyens d'authentification de l'utilisateur et du véhicule sur la base au moins de leurs identifiants;
- des moyens pour envoyer une réponse d'authentification réussie du CCSU au véhicule si l'authentification a réussi;
- des moyens pour recevoir, si l'authentification a réussi, la demande d'autorisation du véhicule (201), pour déterminer si ladite trajectoire est une trajectoire autorisée et, s'il est déterminé que la trajectoire est autorisée, pour envoyer un message de trajectoire autorisée au véhicule;
- des moyens pour suivre la trajectoire du véhicule et vérifier si lors du suivi de la trajectoire toute condition de trajectoire non autorisée par le CCSU se produit et, dans l'affirmative, le CCSU envoie un message au véhicule lui refusant l'autorisation de la trajectoire.

13. Véhicule sans pilote (201) comprenant:
- des moyens pour recevoir d'un dispositif électronique (200) de pilotage du véhicule, appelé poste de commande au sol, GCS, une demande d'accès au véhicule et un identifiant GCS;
- des moyens pour authentifier dans le véhicule un utilisateur (100) du GCS (200) à partir d'au moins l'identifiant de l'utilisateur (100) et l'identifiant GCS reçu du GCS;
- des moyens pour envoyer à un serveur appelé Système de Contrôle Centralisé des véhicules sans pilote, CCSU, via un réseau de communication mobile, un identifiant de véhicule (201) et l'identifiant de l'utilisateur (100) si l'authentification a réussi;
- des moyens pour recevoir du CCSU le résultat d'une authentification basée sur au moins l'identifiant du véhicule (201) et l'identifiant de l'utilisateur (100) et, si cette authentification a réussi, envoyer au CCSU une demande d'autorisation, incluant les caractéristiques de la trajectoire du véhicule demandant l'autorisation;
- des moyens pour recevoir du CCSU un message de trajectoire autorisé ou un message du CCSU au véhicule refusant l'autorisation de la trajectoire.

14. Véhicule selon la revendication 13, dans lequel le véhicule comprend également:
- des moyens pour collecter des informations de position et de navigation;
- des moyens pour envoyer périodiquement des informations de position et de navigation collectées au CCSU et / ou lorsque certains événements de navigation se produisent et / ou lorsque le véhicule reçoit un message de demande d'informations de position et de navigation de la CCSU.

15. Véhicule selon l'une quelconque des revendications 13 ou 14, dans lequel le véhicule comprend:
- des moyens pour, s'il reçoit un message de trajectoire refusée du CCSU, rester stationné au sol sur le site où il se trouve à ce moment ou revenir au point d'origine de la trajectoire.

16. Serveur de contrôle de navigation d'un véhicule sans pilote (201), comprenant:
- des moyens pour recevoir, via un réseau de communication mobile, un identifiant de véhicule (201) et un identifiant de l'utilisateur (100) d'un dispositif de pilotage du véhicule ;
- des moyens d'authentification de l'utilisateur et du véhicule sur la base au moins de leurs identifiants;
- des moyens pour envoyer une réponse d'authentification réussie du CCSU au véhicule si l'authentification a réussi;
- des moyens pour recevoir une demande d'autorisation de trajectoire du véhicule (201) et pour déterminer si ladite trajectoire est autorisée et pour, s'il est déterminé que la trajectoire est autorisée, envoyer un message de trajectoire autorisée au véhicule;
- des moyens de suivi de la trajectoire du véhicule et si lors du suivi de la trajectoire toute condition de trajectoire se produit non autorisée par le CCSU, envoi d'un message au véhicule pour lui refuser l'autorisation de trajectoire.

17. Support de stockage de données numériques non transitoire pour stocker un programme informatique qui comprend des instructions exécutables par ordinateur qui entrainent un ordinateur exécutant le programme à mettre en œuvre le procédé selon l'une quelconque des revendications 1 à 11.
